# EUROPEAN PATENT APPLICATION

(11) **EP 4 512 546 A1**
(43) Date of publication of application: **26.02.2025**
(21) Application number: 23306410.4
(22) Date of filing: 24.08.2023
(51) Int. Cl.: B22F 10/28, B22F 10/37, B22F 10/80, B22F 12/45, B33Y 50/00, B22F 10/366

(54) **POWDER BED FUSION APPARATUS AND METHODS**

(71) Applicant: Renishaw PLC, Wotton-under-Edge, Gloucestershire GL12 8JR (GB)
(72) Inventor: BROWN, Ceri, 77447 Marne la Vallée Cedex 2 (FR)
(74) Representative: Germain Maureau

(57) **Abstract**

A method of determining an irradiation sequence for a powder bed fusion process, wherein each scanner of a plurality of scanners is operated to steer a corresponding energy beam across the powder bed (104) such that a plurality of the energy beams (118a, 118b, 118c, 118d) irradiate the powder bed (104) when a recoater (109) is above the powder bed (104), and powder layers (104a, 104b) are formed with the recoater (109) such that a movement of the recoater (109) on a powder layer forming stroke differs for different ones of the powder layers (104a, 104b). The method comprises determining an irradiation sequence for a powder layer 9104a, 104b) by allocating each scanner to irradiation regions (1a, 2a, 3a, 4a, 1b, 2b, 3b, 4b) taking into account the movement of the recoater (109) on the powder layer forming stroke differing for different ones of the powder layers (104a) such that irradiation of each irradiation region (1a, 2a, 3a, 4a, 1b, 2b, 3b, 4b) is completed before the irradiation region (1a, 2a, 3a, 4a, 1b, 2b, 3b, 4b) is covered during formation of the next powder layer (104b).

## Description

### Field of Invention

This invention concerns a powder bed fusion apparatus and methods. The invention has particular application to powder bed fusion apparatus and methods, wherein an energy beam is scanned across a powder bed simultaneously with forming a powder layer with a recoater.

### Background

A powder bed fusion apparatus produces objects through layer-by-layer consolidation (by melting or sintering) of a powder material, such as a metal powder material, using a high energy beam, such as a laser beam. A powder layer is formed across a powder bed in a build chamber by depositing a heap of powder adjacent to the powder bed and spreading the heap of powder with a wiper across (from one side to another side of) the powder bed to form the layer. A laser beam is then scanned across portions of the powder layer that correspond to a cross-section of the object being constructed. The laser beam irradiates the powder at selected locations to melt or sinter the powder to form consolidated material. After selective consolidation of a layer, the powder bed is lowered and a further layer of powder is spread over the surface and consolidated, as required.

WO2015/140547 A1 discloses apparatus wherein the scanner scans the energy beam across the powder bed to consolidate powder material either side of the wiper when the wiper is moving across the powder bed. The scanner may be controlled to scan the energy beam across at least one of the powder layers during two or more strokes of the wiper across the powder bed, such as a stroke in which the wiper forms the powder layer and one or more subsequent strokes.

In one embodiment, the apparatus comprises a wiper arrangement (referred to hereinafter as a "bidirectional wiper") arranged to spread powder in both directions of travel across the powder bed. The wiper unit comprises two wipers mounted a fixed distance apart. Powder is dispensed into the gap between the wipers, with one wiper spreading powder into a layer as the wiper unit moves from a first side to a second side of the powder bed and the other wiper spreading powder into a layer as the wiper unit moves from the second side to the first side of the powder bed.

A problem with using a bidirectional wiper is that the time for irradiating different portions of a powder layer varies depending on a direction the bidirectional wiper travels to spread a layer. In particular, a portion of the powder layer that is formed last has the least time to be irradiated because it is the first portion covered by the next powder layer formed by the bidirectional wiper. In Figure 7 of WO2015/140547 A1, use of a bidirectional wiper would confine scanning of a layer to periods 1 to 5 (or periods 6 to 10 for the next layer), resulting in the time available for irradiating one portion (portion A for periods 1 to 5 or period C for the next layer) being much greater than for another portion (such as portion C for periods 1 to 5 or period A for the next layer). Accordingly, movement of the bidirectional wiper back over the powder bed to form the next powder layer may have to be delayed to provide sufficient time for irradiating this other portion of the powder layer, diminishing the build time advantages of scanning the energy beam across the powder bed to consolidate powder material either side of the wiper when the wiper is moving across the powder bed.

Ideally, movement of the wiper to spread layers and irradiation of the powder bed should be continuous with minimal or no interruptions to achieve the fastest build times.

### Summary of Invention

According to a first aspect of the invention there is provided a method of determining an irradiation sequence for a powder bed fusion process, wherein each scanner of a plurality of scanners is operated to steer a corresponding energy beam across the powder bed such that a plurality of the energy beams irradiate the powder bed when a recoater is above the powder bed, and powder layers are formed with the recoater such that a movement of the recoater on a powder layer forming stroke differs for different ones of the powder layers.

The method may comprise determining an irradiation sequence for a powder layer by allocating each scanner to irradiation regions taking into account the movement of the recoater on the powder layer forming stroke differing for different ones of the powder layers. The irradiation sequence may be determined such that irradiation of each irradiation region is completed before the irradiation region is covered during formation of the next powder layer.

The method may comprise determining the irradiation regions for a powder layer, wherein a size of at least one of the irradiation regions is based on the movement of the recoater on the powder layer forming stroke of the recoater. The size of two or more irradiation regions may be different.

The method may comprise determining the irradiation regions for a powder layer, and determining the irradiation sequence by allocating a number of the irradiation regions to each scanner based on the movement of the recoater on the powder layer forming stroke such that irradiation of each irradiation region is completed before the irradiation region is covered during formation of the next powder layer. In one embodiment, a different number of irradiation regions may be allocated to at least one of the scanners on successive powder layers. A (second) different number of irradiation regions may be allocated to two or more of the scanners within one of the powder layers. An irradiation time for different scanners for one of the powder layers may be different. The number of irradiation regions may be allocated such that a difference in irradiation times for the scanners are all within a predetermined difference threshold over the two or more powder layers (despite the irradiation times on a per powder layer basis being different or outside the difference threshold).

Determining the irradiation sequence may comprise allocating each scanner to the irradiation regions based on a parameter indicative of an available irradiation time between forming a powder layer across the irradiation region and the irradiation region being covered during formation of the next powder layer, wherein the available irradiation time is different for different irradiation regions. The parameter may be the available irradiation time between forming a powder layer across the irradiation region and the irradiation being covered during formation of the next powder layer. The parameter may be a location of the recoater at a particular time, for example if movement of the recoater is predetermined.

In this way, the irradiation regions allocated to the scanners may be adapted based on the available irradiation time given the movement of the recoater when forming the powder layer to reduce or eliminate inactivity of the energy beams and/or undue delays in spreading the next powder layer.

Each scanner of a plurality of scanners may be operated to steer a corresponding energy beam across the powder bed such that a plurality of the energy beams irradiates the powder bed when a recoater is moving across the powder bed to form a powder layer.

The movement of the recoater may be predetermined and determination of the irradiation sequence may be carried out before commencing a build using the irradiation sequence. For example, the irradiation sequence may be determined using build preparation software. The method may comprise receiving from a user an input identifying the predetermined movement of the recoater. For example, a user may identify a particular powder bed fusion machine on which a build is to be carried out such that the software may identify, for example, from a look-up table, the predetermined movement of the recoater for that machine. Alternatively, the user may input one or more parameters of the recoater movement, such as speed of the recoater and time period for the formation of a powder layer.

In one embodiment, in the powder bed fusion process, powder layers are formed with the recoater such that starting and/or finishing location(s) of the recoater on a powder layer forming stroke differs for different ones of the powder layers and the method comprises determining irradiation regions for a powder layer, wherein a size of at least one of the irradiation regions is based on the starting and/or finishing location(s) of the recoater on the powder layer forming stroke when forming the powder layer. Irradiation regions closer to the finishing location (and further from the starting location) may comprise areas (for example, smaller areas) that can be irradiated in a shorter time period compared to irradiation regions further from the finishing location (and closer to the starting location). The irradiation of a plurality of smaller irradiation regions can be split between multiple energy beams to ensure irradiation is completed in time (even if this requires the energy beams to operate more closely together than a preferred spacing and/or with more handovers between scanners), whereas larger irradiation areas further from the finishing location (and closer to the starting location) ensure that a preferred spacing between energy beams is achieved and/or reduces handovers between scanners). It will be understood that area may be a proxy for irradiation time, but other factors that may influence irradiation time may be taken into consideration, such as scan velocity and/or presence of border scans.

Adjacent irradiation regions are allocated to different scanners (i.e. a boundary of an irradiation region is a location at which the allocated scanner hands-over to another scanner and/or beyond which no powder is irradiated). Adjacent irradiation regions may partially overlap, for example, to enable knitting of consolidated material that is melted or sintered by energy beams directed by different scanners. The irradiation sequence may be determined such that adjacent irradiation regions are, at least in part, irradiated simultaneously. Determining the irradiation sequence may comprise allocating each scanner to one or non-adjacent ones of the irradiation regions such that irradiation of each irradiation region is completed before the irradiation region is covered during formation of the next powder layer.

The method may comprise allocating at least one of the scanners to irradiate a plurality of separated irradiation regions of a powder layer to consolidate (e.g. melt or sinter) powder. The plurality of separated irradiation regions may include the irradiation region closest to a finishing location of the recoater on the powder layer forming stroke forming the powder layer. In this way, when the irradiation region closest to the finishing location of the recoater is unavailable for irradiating (because, for example, it has been covered by the recoater but a portion of the next powder layer has yet to be formed to enable irradiation of the next powder layer), the scanner allocated to this irradiation region can direct the corresponding energy beam to begin irradiating powder of another one of the plurality of separated irradiation regions of the powder layer.

The size may be a width of the irradiation region in a direction of travel of the recoater across the powder bed. The size may be an area of the irradiation region (the area being an area measured in the plane of the powder layer).

The method may comprise forming consecutive powder layers, wherein a first powder layer is formed by movement of the recoater across the powder bed in a first direction and a second, consecutive powder layer is formed by movement of the recoater across the powder bed in a second direction opposed to the first direction (referred to hereinafter as "bidirectional recoating"). In one embodiment, the recoater may form the powder layers through linear motion across the powder bed and the first and second directions are in opposite directions along a straight line. In another embodiment, the recoater may form the powder layers through rotation of the recoater relative to the powder bed about a fixed axis perpendicular to a plane of the powder layers and the first and second directions are in opposite circumferential directions. Accordingly, the finishing location of the recoater differs for consecutive powder layers. In one embodiment, the finishing location for each powder layer is at a side of the powder bed, wherein, for consecutive layers, the finishing location for the recoater is at a different side of the powder bed (opposite sides for linear motion). In such a method, for consecutive powder layers, an irradiation time for irradiating a point on the powder bed not equidistant from the finishing locations of the consecutive powder layers will be different. Accordingly, the method may take account of this change in irradiation time for different powder layers. For example, the size of the irradiation regions to be irradiated for the first powder layer may be determined based on the finishing location for the recoater being on one side of the powder bed and the size of the irradiation regions to be irradiated for the second powder layer may be determined based on the finishing location for the recoater being on another side of the powder bed.

In an alternative embodiment, the method may comprise forming consecutive powder layers, wherein a first powder layer and a second, consecutive powder layer are formed by movement of the recoater across the powder bed in the same direction (referred to hereinafter as "unidirectional recoating"). The movement, such as the starting and/or finishing location(s), of the recoater when forming the first and second powder layers may differ.

The method may comprise forming, with the recoater, a first powder layer that extends partially (not completely) across the powder bed and a second, consecutive powder layer that extends (partially or completely) across the powder bed, wherein a first powder layer area is different (in size or location on the powder bed) to a second powder layer area. The size of the irradiation regions to be irradiated for the first powder layer may be determined based on the movement, such as starting and/or finishing location, of the recoater for the first powder layer and the size of the irradiation regions to be irradiated for the second powder layer may be determined based on the movement of the recoater for the second powder layer. The size of the irradiation regions to be irradiated for the first powder layer may be determined based on the starting location of the recoater for the second powder layer. For example, if a portion of the first powder layer is not covered by the second powder layer, then more time may be available for irradiating this portion of the first powder layer as it can continue to be irradiated during and after formation of the second layer. Accordingly, irradiation areas for this portion of the first powder layer may be sized taking this into account (for example, made larger than would be the case if the second powder layer covered this portion of the first powder layer). Bidirectional or unidirectional recoating may be used to carry out this method. Formation of a powder layer that extends only partially across the powder bed may be desirable in a powder bed fusion process that permits different layer thicknesses in different regions of the areas to be consolidated. For example, it may be desirable to form some parts of an object from thinner layers (for example, to manage thermal stress, to create a desired surface finish and/or to build low angle overhangs), whereas other parts of the object may be formed using thicker layers. Accordingly, the thinner layers may only need to be formed on the powder bed at locations of the object that require thinner layers.

Irradiation of powder within each irradiation region may be allocated to the same scanner. The method may comprise allocating only one scanner to each irradiation region.

The method may comprise generating a gas flow across the powder bed. The method may comprise generating the gas flow in a direction perpendicular to a direction of movement of the recoater. Each irradiation region may extend across the powder bed in a direction of the gas flow. Each irradiation region may extend from one side of the powder bed to an opposite side of the powder bed in a direction of the gas flow. A width of the irradiation region in a direction of movement of the recoater may be based on the movement of the recoater when forming the powder layer. In powder bed fusion comprising multiple laser beams, it is known to divide a powder bed into lanes (sometimes referred to as "swim lanes") extending longitudinally in the direction of gas flow across the powder bed, each laser beam allocated to a different lane, to mitigate the effect of debris and condensate generated by one laser beam on another. The swim lanes separate the processing carried out by each laser beam such that, in most circumstances, significant adverse effects are avoided. Conventionally, a width of each swim lane remains the same for every powder layer. A problem with using this approach when applied to irradiating the powder bed when movement of the recoater when forming a powder layer differs for different powder layers is that it may not be possible for a scanner to irradiate all of the required areas within a lane before the areas are covered during formation of the next powder layer. For bidirectional recoating, the last lane across which a powder layer is formed has to be irradiated more quickly than the other lanes. Furthermore, during movement of the recoater across the powder bed, each lane may be progressively covered by the recoater during which time the scanner allocated to that lane may not be used to irradiate the powder bed. A method of determining an irradiation sequence according to the invention may mitigate or avoid this problem by adjusting the size of the irradiation regions, such as swim lanes, based on the movement of the recoater when forming the powder layer. For example, a last irradiation region, such as the last swim lane, across which the powder layer is formed may be smaller, such as narrower, than other irradiation regions, such as other swim lanes, across which the powder layer is completed earlier.

The scanners may be allocated to the irradiation regions such that, when an irradiation region allocated to the scanner becomes unavailable for irradiation, another irradiation region (in the same or a different powder layer) allocated to the scanner is available for irradiation. In this way, downtime of the scanner is reduced.

According to a second aspect of the invention there is provided a powder bed fusion process comprising forming powder layers of a powder bed with the recoater such that a movement of the recoater on a powder layer forming stroke differs for different ones of the powder layers and operating each scanner of a plurality of scanners to steer a corresponding energy beam across the powder bed such that a plurality of the energy beams irradiate the powder bed when a recoater is over the powder bed in accordance with an irradiation sequence determined in accordance with the method of the first aspect of the invention.

According to a third aspect of the invention there is provided a powder bed fusion process comprising forming powder layers of a powder bed with the recoater such that a movement of the recoater on a powder layer forming stroke differs for different ones of the powder layers and operating each scanner of a plurality of scanners to steer a corresponding energy beam across the powder bed such that a plurality of the energy beams irradiate the powder bed when a recoater is over the powder bed in accordance with an irradiation sequence in which each energy beam irradiates selected areas within irradiation regions. The irradiation regions may have different sizes such that irradiation of each irradiation region is completed before the irradiation region is covered during formation of the next powder layer.

At least one of the powder layers may be irradiated on two or more strokes of the recoater. The two or more strokes may include a powder layer forming stroke for the powder layer and a powder layer forming stroke that forms the next powder layer. The strokes may be in opposed directions (bidirectional recoating).

The energy beams may be laser beams. Each scanner may comprise at least one movable optical element for steering the corresponding laser beam across the powder bed. The irradiation of the powder by the energy beams may consolidate the powder by melting or sintering the powder.

The recoater may comprise at least one wiper for spreading powder across the powder bed. The wiper may be a brush, roller, blade or a selective powder deposition drum, for example the device as disclosed in WO2019/185626 A1, which is incorporated herein by reference in its entirety. The recoater may comprise a pair of spaced apart, parallel wipers arranged such that powder can be dosed in a gap between the wipers. In such an arrangement, one of the wipers spreads powder when the recoater is moved in one direction and the other one of the wipers spreads powder when the recoater is moved in the other direction.

According to a fourth aspect of the invention there is provided a powder bed fusion process comprising forming powder layers of a powder bed with the recoater and, when a recoater is moving across the powder bed to form each powder layer of a plurality of the powder layers, operating at least one scanner to steer a corresponding energy beam across the powder bed such that the energy beam irradiates the powder bed to melt powder. A plurality of regions of the powder layer may be consolidated to form together a consolidated section within the powder layer by melting powder of each region together with powder of at least one other powder layer through the irradiation of the powder bed by the energy beam. Powder of different ones of the regions may be melted en masse with powder of different other powder layers.

In this way, different regions in the powder layer may be consolidated after the formation of different powder layers, reducing the irradiation time for the energy beam for each stroke of the recoater. This may allow preferred spacing and ordering of the irradiations, for example relative to a gas flow direction, to be maintained because there is no longer a requirement to complete consolidation of a powder layer before the regions to be consolidated are covered during formation of the next powder layer. The irradiations melt a powder thickness (powder thicknesses) corresponding to two or more powder layers with the melt pools formed to consolidate the regions of the powder layer offset in the build direction (i.e. with an upper surface of different ones of the melt pools formed in the plane of different powder layers). Such a method may increase the number of powder layer forming strokes of the recoater for a build (as a melted powder thickness is formed by multiple strokes of the recoater) but this may not delay the build as, for a typical build, the irradiation time for a powder layer is longer than the time it takes for the recoater to complete two or more strokes.

Furthermore, this method may reduce or even eliminate significant residual stresses due to shrinkage of the consolidated material. Voids created by the gathering/denuding of powder during melting of material may be filled before the melting of further regions within a powder layer. Accordingly, the method may both mitigate warping of the object and the presence of pores within the object. In addition, a mass of powder formed when forming each region extends across different sets of layers for different regions potentially reducing lines of weakness caused by the prior art method of consolidating all (or a majority) of regions of a layer immediately after forming the layer.

First ones of the regions may be melted through direct irradiation of the powder layer whilst second ones of the regions may be melted through direct irradiation of a subsequent powder layer. In this way, gaps in the powder layer formed by gathering of powder during formation of the first ones of the regions are filled by the formation of the subsequently formed layers before the other ones of the regions are melted. This may reduce pores in the object.

The first ones of the regions may be melted during a first powder layer forming stroke of the recoater and the second ones of the regions may be melted on a second, subsequent stroke of the recoater. The first and second strokes may be consecutive strokes of the recoater.

The first ones of the regions may be melted to form discrete regions having powder of the powder layer therebetween before melting of the second ones of the regions, wherein solidification of the second regions joins the first ones of the regions together. In this way, each discrete first region can individually shrink during cooling, reducing residual stresses in the object.

The regions may be consolidated to form part of a core of the object. The method may comprise forming a border by melting material surrounding the regions, for example, as would be typically carried out in a hull and core scanning strategy. The border may be formed by melting powder thicknesses different to the regions. For example, a border powder thickness may be a thickness of a single powder layer.

Powder at the border may be melted every powder layer.

In an alternative embodiment, the melting of powder layers at the border may be skipped such that at least a section of the border is formed by melting multiple powder layers. Different sections of the border regions may be melted en masse with powder of different other powder layers. For example, first sections of the border may be melted through direct irradiation of the powder layer whilst second sections of the border may be melted through direct irradiation of a subsequent powder layer. The first sections of the border may form an overhanging part of the object in the as built orientation, wherein a component of the recoater direction when forming the subsequent powder layer is in an overhang direction of the overhanging part. A component of the recoater direction when forming the powder layer may be opposed to an overhang direction of the overhanging part. The overhang direction is a vector normal to an edge of an area to be consolidated in the powder layer, the vector having a direction from consolidated material of the area to powder. Accordingly, consolidation of the border may transition from first sections of the border that are melted by direct irradiation of the powder layer to second sections melted through direct irradiation of a subsequent powder layer as the overhang direction changes relative to the recoater direction for different points along the edge of the area. Such a method may reduce or eliminate detrimental effects resulting from the parts of the overhang catching on the recoater as the recoater is moved over the powder bed during formation of the subsequent powder layer. For example, movement of the recoater across a thin layer of consolidated material in a direction opposed to the overhang direction may move or otherwise detrimentally effect the thin layer, for example due to the recoater pushing powder underneath the thin layer, whereas movement of the recoater in the other direction may avoid such detrimental effects. Accordingly, the method may facilitate the building of thin layers and/or low angled overhangs.

Different ones of the regions may be melted together with a different number of the other layers. This may be achieved by altering a power of the at least one energy beam. Alternatively, all regions melted together with other layers may be melted together with the same number of other powder layers.

The method may comprise forming powder layers of different thicknesses. A thickness of each powder layer may depend on a geometry of an object being formed. The thickness of each powder layer may be based on an angle of an overhang of the object in the as built orientation. The method may comprise selecting a powder layer thickness based on the angle of the overhang. Thinner thicknesses may be selected for powder layers to be consolidated to form an overhang at a smaller angle to a horizontal/a plane of the powder layer. The powder layer thickness may be selected based on a length of an overhanging part in the powder layer (which is a function of an angle of the overhang to be formed). The powder layer thickness may be selected such that the length of the overhanging part is below a predetermined threshold length.

An overhanging part is an area of a powder layer to be consolidated having unconsolidated powder of the immediately preceding layer therebelow. An overhang is a section of the object that includes a downwardly facing surface in the as built orientation.

The recoater may comprise a bidirectional recoater as described above.

According to a fifth aspect of the invention there is provided a method of determining an irradiation sequence for a powder bed fusion process according to the fourth aspect of the invention. The method may comprise determining an area to be consolidated within a powder layer from geometric data of an object to be built and determining first regions of the powder layer to be melted en masse with powder of a first set of powder layers through direct irradiation of the powder layer to the at least one energy beam and second regions of the powder layer to be melted en masse with powder of a second set of powder layers through direct irradiation of a subsequent powder layer to the at least one energy beam. The first set of powder layers may be different to the second set of powder layers. The method may comprise determining the irradiation sequence for the powder layer and the subsequent powder layer based on the first and second regions.

The first regions may be determined by identifying regions to be melted in the powder layer that coincide in the build direction with regions to be melted in an immediately preceding powder layer. The second regions may be determined by identifying regions to be melted in the subsequent powder layer that coincide in the build direction with regions of the powder layer. In this way, the regions in the powder layer can be melted en masse with powder of the regions in the immediately preceding and subsequent powder layer.

The irradiation sequence may be determined based on a predetermined recoater movement across the powder bed. The recoater may be a bidirectional recoater.

According to a sixth aspect of the invention there is provided a method of determining an irradiation sequence for a powder bed fusion process comprising determining a build orientation of an object to be built in the powder bed fusion process; from geometric data describing the object, determining a geometric characteristic of a surface of the object at different locations in a build direction, selecting different powder layer thicknesses for powder layers based on the geometric characteristic and determining an irradiation sequence based on the selected layer thicknesses and the geometric data.

Each powder layer thickness may be determined based on an angle of a surface, such as an angle of an overhang, of the object in the as built orientation. The method may comprise selecting a powder layer thickness based on the angle of the overhang. Thinner thicknesses may be selected for powder layers to be consolidated to form an overhang at a smaller angle to a horizontal/a plane of the powder layer. The powder layer thickness may be selected based on a length of an overhanging part in the powder layer (which is a function of an angle of the overhang to be formed). The powder layer thickness may be selected such that the length of the overhanging part is below a predetermined threshold length.

The method may comprise selecting the different layer thicknesses based on maintaining a distance between adjacent exposures on successive powder layers within a predefined range of acceptable distances, wherein the adjacent exposures form a surface of the object (exposures of a "skin" of the object). The range of acceptable distances between the adjacent exposures may depend on an angle of a vector between the adjacent exposures to a build plane. The exposures of a skin are located, in part, based on a geometry of a surface of the object. If a constant layer thickness is used (as is conventional), as the surface geometry becomes shallower relative to a build plane, the distance between adjacent exposures of the skin becomes larger, which can result in build failure. The method of this aspect of the invention avoids such build failure by selecting different layer thicknesses to maintain the distance between adjacent exposures of the skin on adjacent layers to be within the predefined range of acceptable distances.

The different powder layer thicknesses may be selected such that a thickness of powder layers differs between different pairs of adjacent exposures, the adjacent exposures of each pair carried out on powder layers formed in succession and the material consolidated as a result of the exposures forms a surface of the object (e.g. exposures of a "skin" of the object). The adjacent exposures may extend the surface in a horizontal build direction. The different layer thicknesses between the different pairs of the adjacent exposures may include a zero-thickness powder layer (a powder layer formed at the same position in the build direction as a previous powder layer) and a non-zero thickness powder layer. The zero-thickness powder layer may be between adjacent exposures located in the same horizontal plane of the object in the as built orientation of the object. It has been found that irradiating a powder layer can result in powder being denuded from the irradiated area. This can result in undesirable results if an adjacent area is subsequently irradiated to melt powder because the powder missing from this area. When growing a part in a vertical build direction using fixed powder layer thicknesses, the denuded powder was replaced by the new powder layer. However, when the exposures extend a surface of the object in a horizontal build direction, conventionally no provision is provided for replacing the denuded powder. By forming powder layers of variable thickness between the adjacent exposures that form the surface, the denuded powder is replaced with fresh powder before an adjacent exposure is carried out, whilst growth in the vertical direction can be adjusted as appropriate based on the object geometry. It will be understood that the thickness of the powder layer as used herein means thickness relative to the previous powder layer. A powder layer is the layer of powder formed by movement of a recoater. A thickness of a powder layer is defined by relative movement between a build platform that supports the powder bed and the recoater. An exposure may melt multiple powder layers.

The adjacent exposures may comprise adjacent contour scan paths that form a surface of the object. The method may comprise selecting to form a powder layer between every pair of adjacent contour scan paths that form a surface of the object. Accordingly, powder layer thicknesses may be selected based on a location of each adjacent contour scan path.

The powder bed fusion process may comprise operating at least one scanner to steer a corresponding energy beam across the powder bed such that the energy beam irradiates the powder bed to consolidate powder when a recoater is moving across the powder bed to form a powder layer.

According to a seventh aspect of the invention there is provided a powder bed fusion process comprising forming powder layers of different thicknesses to form a powder bed and operating at least one scanner to steer a corresponding energy beam across the powder bed such that the energy beam irradiates the powder bed to melt powder. A thickness of each powder layer is based on a geometric characteristic of a surface of an object being formed. The powder bed fusion process may carry out an irradiation sequence determined in accordance with the sixth aspect of the invention.

According to an eighth aspect of the invention there is provided a powder bed fusion process comprising forming powder layers of a powder bed with a recoater and irradiating areas of each powder layer to melt powder to form an object, wherein areas, which, when consolidated, form an overhanging part of the object in the as built orientation, are formed by irradiating selected ones of the powder layers, and a component of a recoater direction when forming a next powder layer across the overhanging part, is in an overhang direction of the overhanging part.

Different overhanging parts formed in a powder layer may be melted en masse with powder of different other powder layers. For example, first ones of the overhanging parts may be melted through direct irradiation of the powder layer to the at least one energy beam whilst second ones of the powder layer may be melted through direct irradiation of a subsequent powder layer to the at least one energy beam. A component of the recoater direction when forming the next powder layer may be in an overhang direction of the first overhanging part. A component of the recoater direction when forming the powder layer may be opposed to an overhang direction of the first overhanging part. The overhang direction is a vector normal to an edge of an area of the object to be formed from the powder layer having a direction from consolidated material of the area to powder. Accordingly, consolidation of the first and second overhanging parts may transition from first overhanging parts melted by direct irradiation of the powder layer to second overhanging parts melted through direct irradiation of the next powder layer as the overhang direction changes relative to the recoater direction for different points along the edge of the area to be consolidated. Such a method may reduce or eliminate detrimental effects resulting from the parts of the overhang catching on the recoater as the recoater is moved over the powder bed during formation of the next powder layer. The method may facilitate the building of thin layers and/or low angled overhangs.

The at least one scanner may be operated to steer a corresponding energy beam across the powder layer such that the energy beam irradiates the powder bed to melt powder when a recoater is moving across the powder bed to form the powder layer and/or the next powder layer.

According to a ninth aspect of the invention there is provided a method of determining an irradiation sequence for a powder bed fusion process comprising determining a build orientation of an object to be built in the powder bed fusion process; from geometric data describing the object, selecting powder layers in which overhang areas are to be consolidated, the overhang areas forming overhanging parts of the object in the as built orientation, such that a component of a recoater direction when forming a next powder layer over the overhang area is in an overhang direction of the overhang area.

According to a tenth aspect of the invention there is provided a powder bed fusion apparatus comprising a controller arranged to control the powder bed fusion apparatus to carry out the powder bed fusion process according to the second, third, fourth, seventh, and/or eighth aspects of the invention.

According to an eleventh aspect of the invention there is provided a data carrier having instruction stored thereon, wherein, when the instructions are executed by a processor, the processor is caused to carry out the method of the first, fifth, sixth and/or ninth aspects of the invention.

The data carrier may be a suitable medium for providing a machine with instructions such as a non-transient data carrier, for example a floppy disk, a CD ROM, a DVD ROM / RAM (including - R/-RW and +R/ + RW), an HD DVD, a Blu Ray(TM) disc, a memory (such as a Memory Stick(TM), an SD card, a compact flash card, or the like), a disc drive (such as a hard disc drive), a tape, any magneto/optical storage, or a transient data carrier, such as a signal on a wire or fibre optic or a wireless signal, for example a signal sent over a wired or wireless network (such as an Internet download, an FTP transfer, or the like).

It will be understood that the term "adjacent" used herein in conjunction with two like elements (e.g. two irradiation regions, two exposures or two layers) means the two like elements are next to each other and/or one of the elements is the immediate neighbour to the other of the elements without an intervening element of that type.

### Description of the Drawings

**FIGURE 1** is a schematic of a powder bed fusion apparatus according to an embodiment of the invention;
**FIGURE 2** is a plan view of the powder bed fusion apparatus showing the plurality of scanners;
**FIGURE 3** is a schematic illustrating a gas flow across a powder bed and division of the powder bed into lane-like irradiation regions (also called "swim lanes") allocated to each scanner;
**FIGURES 4a** **and** **4b** are schematics illustrating a method of determining lane-like irradiation regions taking a gas flow direction into consideration and allocating a corresponding scanner to each irradiation region in accordance with an embodiment of the invention;
**FIGURE 5** is a schematic illustrating a method of determining lane-like irradiation regions taking a gas flow direction into consideration, wherein a width of the lane-like irradiation regions is based on an area to be consolidated;
**FIGURE 6** is a schematic illustrating a method of determining lane-like irradiation regions taking a gas flow direction into consideration and allocating one or more scanners to each irradiation region in accordance with another embodiment of the invention;
**FIGURES 7a** **and** **7b** are schematics illustrating a method of determining irradiation regions and allocating a corresponding scanner to each irradiation region in accordance with a further embodiment of the invention;
**FIGURE 8** is a schematic illustrating a modification to the method described in Figure 7a and 7c comprising multiple irradiation zones allocated to each scanner;
**FIGURES 10a** **and** **10b** are schematics illustrating a method of allocating fixed sized irradiation regions (in this example, square irradiation regions of fixed size) in accordance with yet another embodiment of the invention;
**FIGURES 11a** **and** **11b** are schematics illustrating a method of determining striped irradiation regions and allocating a scanner to each striped irradiation region in accordance with a yet further embodiment of the invention;
**Figure 12** is a schematic illustrating a method of powder bed fusion according to an embodiment of the invention;
**Figure 13** is a schematic illustrating a method of powder bed fusion according to an embodiment of the invention using variable layer thickness;
**Figure 14** is a schematic illustrating a method of powder bed fusion using variable layer thickness according to another embodiment of the invention;
**Figures 15a to 15f** illustrate layer-by-layer how the powder bed fusion process illustrated in Figure 14 is carried out; and

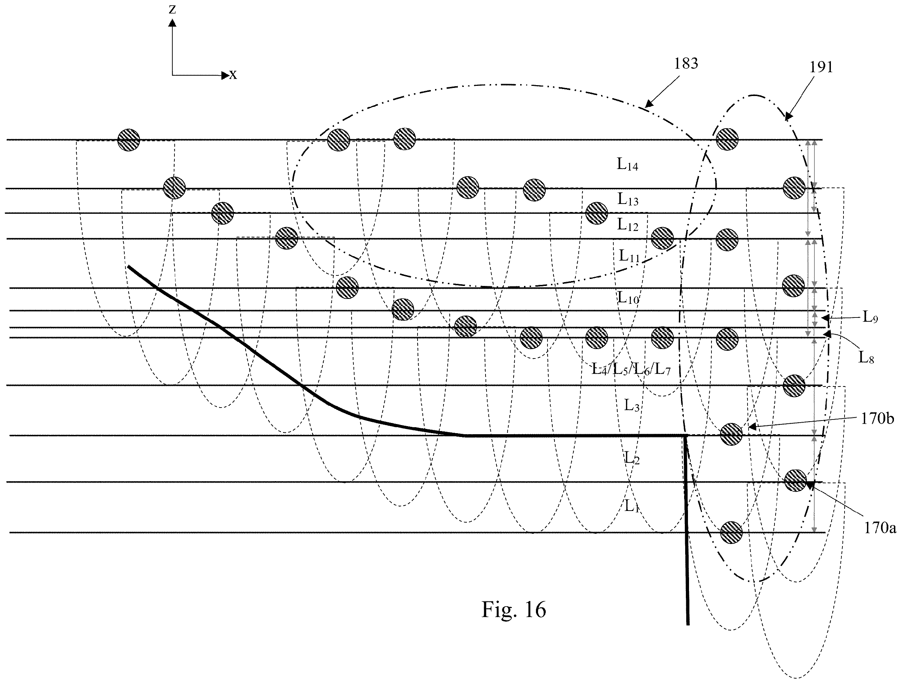

**Figure 16** is a schematic illustrating a method of powder bed fusion using variable layer thickness according to yet another embodiment of the invention.

### Description of Embodiments

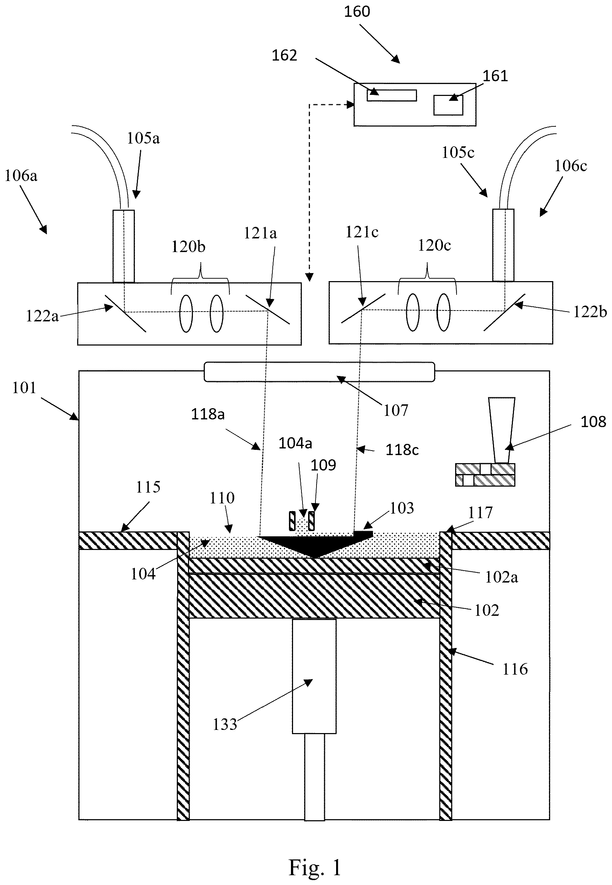

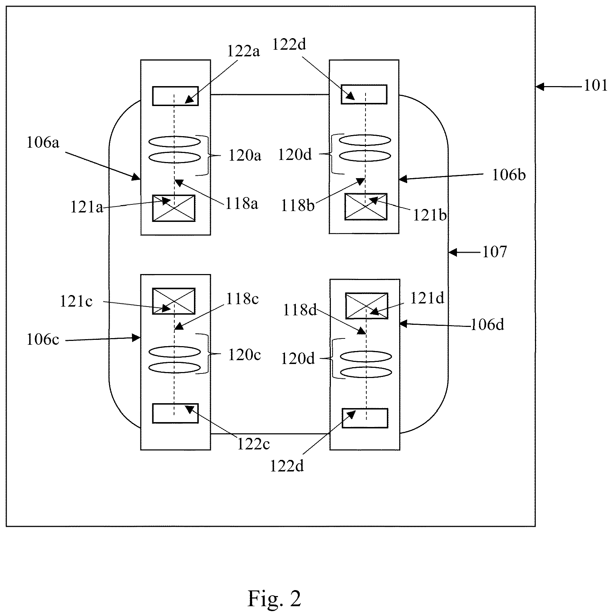

Referring to Figures 1 and 2, a powder bed fusion apparatus according to an embodiment of the invention comprises a build chamber 101 having therein a processing plate 115 having an aperture therein and a build sleeve 116 extending down from the aperture. A build platform 102 is lowerable in the build sleeve 116 such that build sleeve 116 and build platform 102 together define a build volume 117. The build platform 102 supports a build substrate plate 102a, a powder bed 104 and workpiece (object) 103 as the workpiece is built by selective laser melting of the powder. The platform 102 is lowered within the build volume 117 under the control of a drive mechanism (not shown) as successive layers 103a, 103b of the workpiece 103 are formed.

Layers of powder 104 are formed as the workpiece 103 is built by dispensing apparatus 108 and a recoater 109. The recoater 109 comprises a pair of spaced apart wiper blades, each wiper blade for spreading powder across the powder bed 104 in a different, opposite direction. This recoater 109 may be called a bidirectional recoater as it spreads powder layers through movement in the opposed directions. The dispensing apparatus 108 dispenses powder 104a into the gap between the spaced apart wiper blades when the recoater 109 is located below the powder dispenser 108. Mechanisms for achieving such timely dispense are disclosed in US6672343 B1. Movement of the recoater 109 spreads the dispensed powder into powder layers of the powder bed. A position of a lower edge of each blade of the recoater 109 defines a working plane 110 at which powder is melted.

A plurality of laser modules generate laser beams 118a, 118b, 118c, 118d for melting the powder 104. Each laser module comprises a fibre optic 128a, 128b, 128c, 128d and beam delivery optic (BDO) 105a, 105b, 105c and 105d for delivering the laser beam 118a, 118b, 118c, 118d to the corresponding optical scanner 106a, 106b, 106c, 106d. The optical scanner 106a, 106b, 106c, 106d steers the laser beams 118a, 118b, 118c, 188d on to selected areas of the powder bed 104 in order to build the object. The laser beams 118a, 118b, 118c, 118d enter through a common laser window 107.

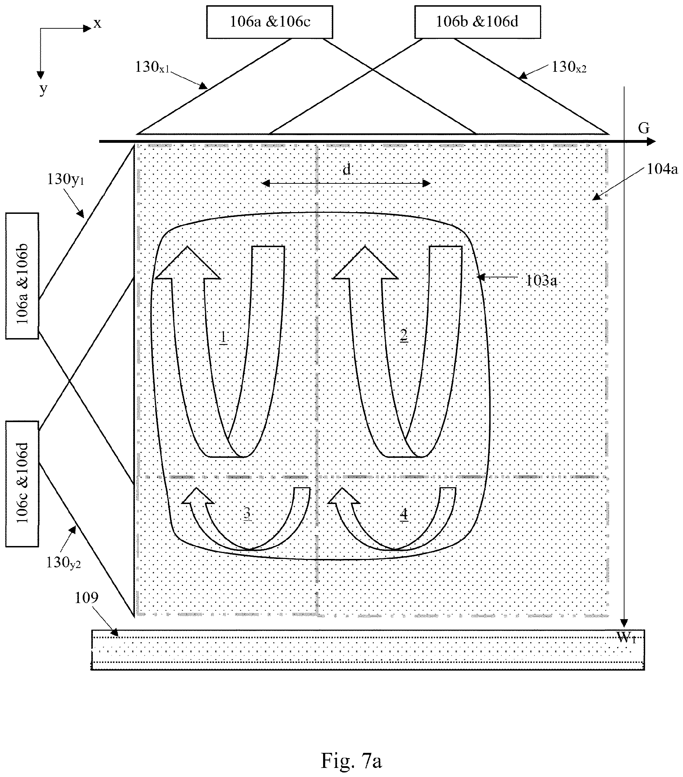

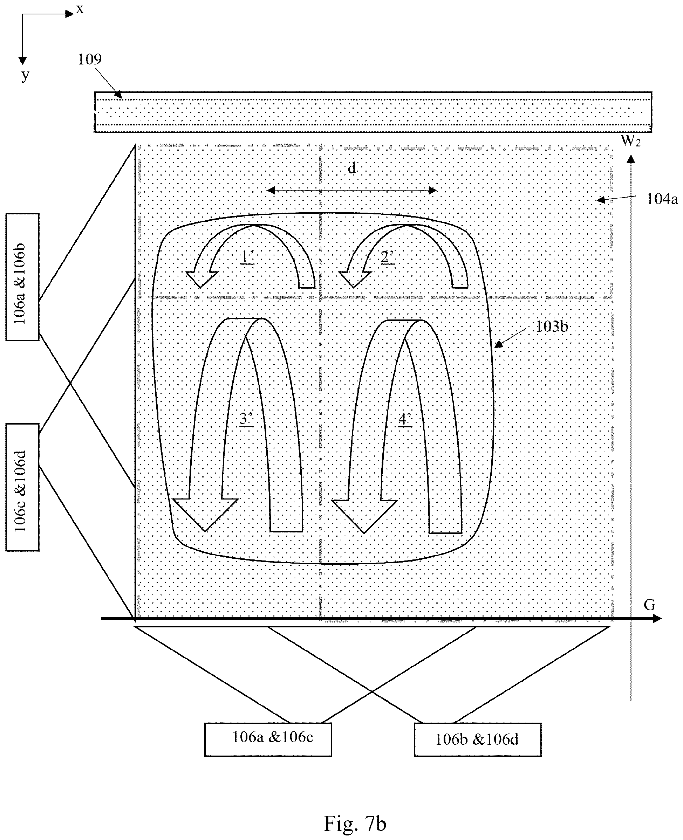

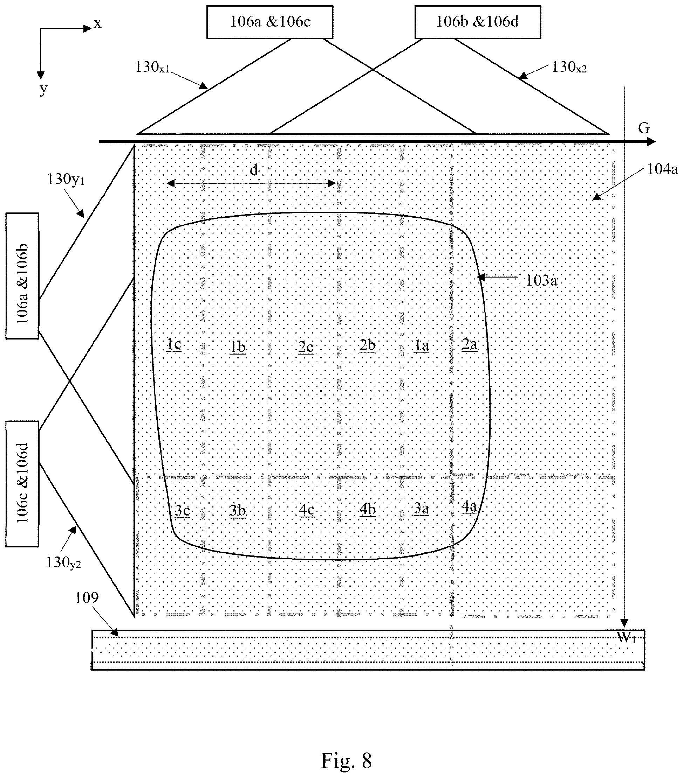

Each optical scanner 106a, 106b, 106c, 106d comprises movable steering optics 121, such as two mirrors mounted on galvanometers, for steering the laser beam 118 in perpendicular directions, X and Y, across working plane 110 and focussing optics 120, such as two movable lenses for changing the focus of the laser beam 118. The optical scanner is controlled such that the focal position of the laser beam 118 remains in the same plane 110 as the laser beam 118 is moved across the working plane 110. In this embodiment, each scanner can steer the corresponding laser beam 118 across a working field which covers the whole of the powder bed 104. However, in other embodiments, such as the embodiment shown in Figures 7a and 7b and 8, each scanner 106 has a working field that only partially covers the powder bed 104. The term "addressable field" as used herein means an area in the working plane 110 across which the scanner 106 can steer the corresponding laser beam 118 in response to a demand signal. The working field of a scanner 106 is an area in the working plane and may correspond to the addressable field. However, further limits may be placed on the working field due to physical limitations of the powder bed fusion apparatus or physical limitations of a calibration process. For example, demand positions of the scanner 106 may be confined so as not to extend beyond the edge of the powder bed 104 (referred to herein as the "working area") or outside of an area for which the scanner 106 is calibrated (referred to herein as the "scan field"). The extent of the working field is defined on set up of the machine and is independent of a build.

The powder bed fusion apparatus comprises a controller 160 for controlling modules of the apparatus, including the lasers, the scanners 106a, 106b, 106c, 106d and movement of the recoater 109. The controller comprises a processor 161 and memory 162 that has stored thereon a computer programme, which, when executed by the processor causes the powder bed fusion apparatus to be controlled in the manner described below. The software may comprise instructions generated by build preparation software. The build preparation software may be located on the apparatus or remote from the apparatus, such as on a general-purpose computer. The build preparation software generates instructions, such as scan paths, scanning parameters and/or scanning sequences, based on geometry of the object 103 to be built and these instructions are sent to the controller for execution. The scanning parameters may be laser power, scanning speed (or point distance and exposure time), spot size, and/or other parameters that affect a melt pool shape. A layer thickness is conventionally the same for all powder layers and set by a user. However, for some of the embodiments described below, the powder layer thickness is also a variable to be selected based on a geometry of the object 103 to be built.

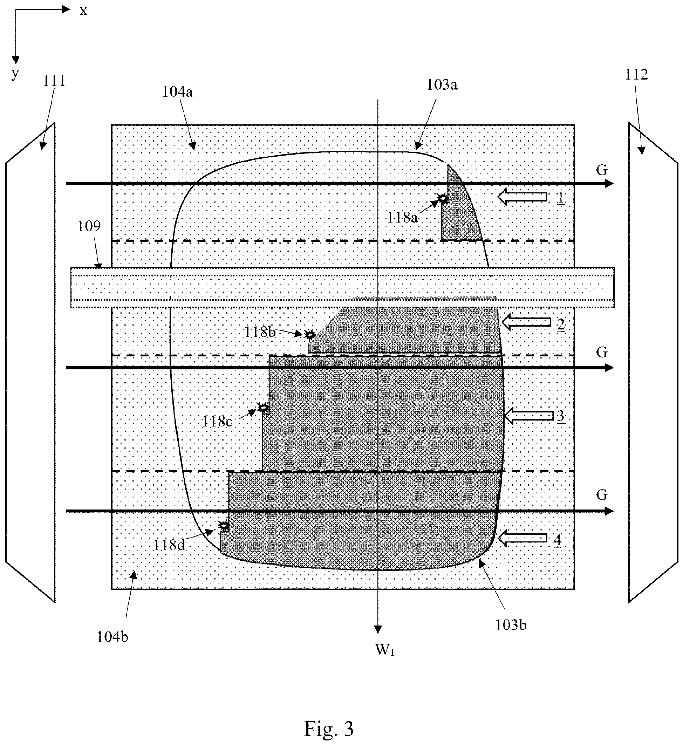

Referring to Figure 3, the powder bed fusion apparatus further comprises a gas nozzle 111 for delivering gas into the build chamber 101 and a gas exhaust 112 for extracting gas from the build chamber 101 in order to create a gas flow from one side to an opposite side of the powder bed 104 in a gas flow direction G. Build preparation software may notionally divide the powder bed 104 into lane-like irradiation zones 1, 2, 3 and 4 (sometimes referred to as "swim lanes"), each scanner 106a, 106b, 106c, 106d allocated to a different one of the lane-like irradiation zones 1, 2, 3 and 4 such that irradiation of the powder bed 104 by that scanner 106a, 106b, 106c, 106d is limited to areas to be consolidated that fall within the allocated irradiation zone 1, 2, 3, 4. The scanning of the areas to be consolidated that fall within an allocated irradiation zone 1, 2, 3, 4 is sequenced such that scanning by the allocated scanner 106a, 106b, 106c, 106d progresses in a direction opposed to gas flow (as indicated by the non-solid arrows). (WO2014/125280 and WO2014/125258, which are incorporated herein in their entirety by reference, describe selecting a scanning sequence based on gas flow direction and these principles are applied to each scanner allocated to each irradiation zone 1, 2, 3, 4). In this way, simultaneous scanning of the powder bed 104 can be carried out whilst mitigating problems caused by melting downstream in the gas flow direction of an upstream laser beam, as condensate clouds and spatter will mainly be confined to downstream of the laser beam within the corresponding lane-like irradiation zone 1, 2, 3, 4, which have already been melted by the laser beam. "Downstream" as used herein means within or deemed to be within a stream of debris generated by the melting of an upstream point or region. The term "downwind" as used herein is a region or point further along in the direction of gas flow, G, whether or not it falls within or is deemed to fall within the debris produced by melting of an upwind point or region. The use of lane-like irradiation zones 1, 2, 3, 4 is a rule that approximates the requirement that downstream scanning of the powder bed is avoided in a multi-scanner powder bed fusion machine.

Figure 3 illustrates a bidirectional recoater 109 moving across the powder bed 104 simultaneously with irradiation of the powder bed 104 with the laser beams 118a, 118b, 118c, 118d whilst keeping each laser beam 118a, 118b, 118c, 118d within the corresponding lane-like irradiation zone 1, 2, 3, 4. Slices 103a, 103b of an object 103 being formed for powder layers 104a and 104b are illustrated and the material consolidated so far within these slices is shown as shaded areas. An issue that arises in such a method is that the available time to irradiate material in each lane-like irradiation region is not equal and there may not be enough time to irradiate material within a lane-like irradiation zone 1, 2, 3, 4 without delaying (or introducing an additional delay) to the recoater movement. This is illustrated in Figure 3, wherein a powder layer 104b has been formed and the recoater is in the process of forming powder layer 104a through movement in the direction W₁. Formation of powder layer 104a progressively covers powder layer 104b so that it is no longer available for irradiating. Powder layer 104b is formed first across irradiation region 4, then 3, 2 and finally 1, whereas powder layer 104a is formed across the irradiation zones in the reverse order 1, 2, 3, 4. Accordingly, irradiation zone 1 of powder layer 104b is the last to be formed but the first to be covered by powder layer 104a followed by 2, then 3 and finally 4. Hence, the time available for irradiating zone 1 for powder layer 104b is less than all the other irradiation zones 2, 3 and 4, the time available for irradiating zone 2 for powder layer 104b is less than irradiation zones 3 and 4, and the time available for irradiating zone 3 for powder layer 104b is less than for irradiation zone 4. This can result in laser beam 118c and/or 118d being underutilised because these laser beams 118c, 118d may finish irradiating the allocated irradiation zone 3, 4 in powder layer 104b before the corresponding irradiation zone becomes available in powder layer 104a. Furthermore, laser beams 118a and/or 118b may not have enough time to irradiate powder layer 104b before these irradiation zones are covered by powder layer 104a, requiring a delay in recoating to be introduced to provide enough time. Furthermore, when the recoater 109 is over an irradiation zone 1, 2, 3, 4, the allocated laser beam 118a, 118b, 118c, 118d may have to be turned off as it may be deemed that no area of the irradiation zone 1, 2, 3, 4 can be processed during this time. For example, as well as not scanning the laser beam 118a, 118b, 118c, 118d across the recoater 109, a safety zone may be implemented one or both sides of the recoater 109 in which scanning should not occur (as is disclosed in WO2015/140547). This is illustrated by the irradiation of powder layer 104b by laser beam 118b being curtailed due to movement of the recoater 109 into the irradiation zone 2. These issues will occur for each powder layer but in the reverse direction for alternate powder layers, such as when powder layer 104b is formed by recoater movement in the opposed direction.

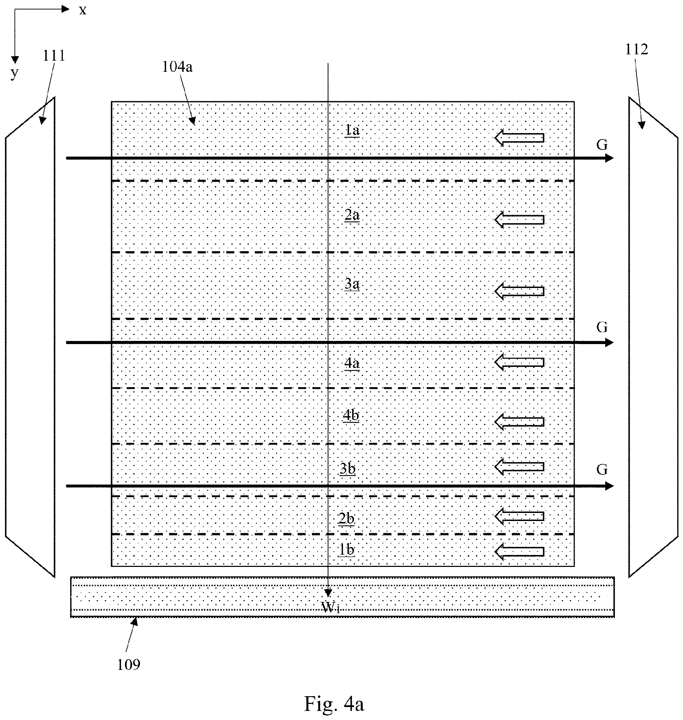

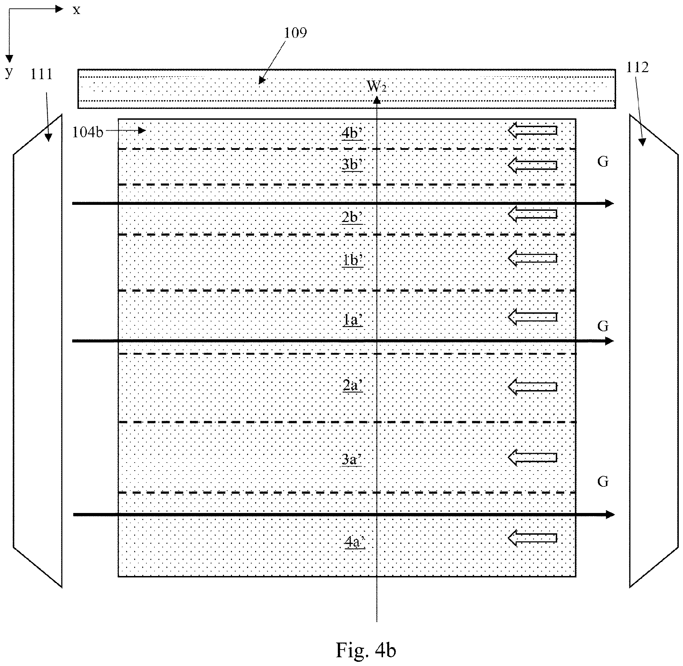

Referring to Figures 4a and 4b, in one embodiment of the invention, irradiation regions, in this embodiment, irradiation zones 1a, 2a, 3a, 4a, 1b, 2b, 3b, and 4b for powder layer 104a and irradiation zones 1a', 2a', 3a', 4a', 1b', 2b', 3b', 4b' for powder layer 104b, are determined based on movement of the recoater 109 on the stroke forming the powder layer 104a and 104b respectively. An irradiation sequence is determined for each powder layer 104a, 104b by allocating each scanner 106a, 106b, 106c, 106d to ones of the irradiation regions 1a, 2a, 3a, 4a, 1b, 2b, 3b, 4b, 1a', 2a', 3a', 4a', 1b', 2b', 3b', 4b' taking into account the movement of the recoater 109 on the stroke forming the powder layer 104a, 104b such that irradiation of each irradiation region 1a, 2a, 3a, 4a, 1b, 2b, 3b, 4b, 1a', 2a', 3a', 4a', 1b', 2b', 3b', 4b' is completed before the irradiation region 1a, 2a, 3a, 4a, 1b, 2b, 3b, 4b, 1a', 2a', 3a', 4a', 1b', 2b', 3b', 4b' is covered during formation of the next powder layer.

Powder layers 104a, 104b shown in the Figures represent alternate powder layers formed during a powder bed fusion process. Accordingly, a plurality of powder layers 104a are formed interspersed between a plurality of powder layers 104b. Powder layers 104a are formed through movement of the recoater 109 in the recoater direction W₁ and powder layer 104b are formed through movement of the recoater 109 in the recoater direction W₂.

In this embodiment, a plurality of lane-like irradiation zones 1a, 2a, 3a, 4a, 1b, 2b, 3b, 4b; 1a', 2a', 3a', 4a', 1b', 2b', 3b', 4b'are determined for each powder layer 104a, 104b, different ones of the lane-like irradiation zones 1a, 2a, 3a, 4a, 1b, 2b, 3b, 4b; 1a', 2a', 3a', 4a', 1b', 2b', 3b', 4b' having different sizes, in this embodiment different widths of the lane-like irradiation zone, in a direction of movement W₁, W₂ of the recoater 109. Lane-like irradiation zones 1a, 2a, 3a, 4a; 1a', 2a', 3a', 4a' further from the finishing location of the recoater 109 (Figure 4a showing the finishing location for powder layer 104a and Figure 4b showing the finishing location for powder layer 104b) are wider in a recoater direction W₁, W₂ than a width of lane-like irradiation zones 1b, 2b, 3b, 4b; 1b', 2b', 3b', 4b' closer to the finishing location. In this way, it is ensured that a laser beam 118a, 118b, 118c, 118d allocated to the irradiation zone 1a, 2a, 3a, 4a, 1b, 2b, 3b, 4b; 1a', 2a', 3a', 4a', 1b', 2b', 3b', 4b' can complete scanning of area(s) within the irradiation zone before the region is covered by the next powder layer. In a further embodiment, a width of each irradiation zone 1a, 2a, 3a, 4a, 1b, 2b, 3b, 4b; ; 1a', 2a', 3a', 4a', 1b', 2b', 3b', 4b' is not just based on the finishing location but is based on other factors, such as a predicted time to complete irradiation of area(s) that fall within the irradiation regions and/or an area of the area(s) to be irradiated within the irradiation regions. As a result of taking into account these additional factors, lane-like irradiation zones further from the finishing location of the recoater 109 may be narrower in a recoater direction W1, W2 than a width of lane-like irradiation zones closer to the finishing location. However, unequal irradiation times for each laser beam 118a, 118b, 118c, 118d within a single powder layer 104a, 104b may be allowed as long as, on a scanner completing irradiating the allocated area(s) in a powder layer 104a, 104b, the scanner can begin irradiating an area on the next powder layer 104a, 104b.

In the embodiment shown in Figures 4a and 4b, more lane-like irradiation zones 1a, 2a, 3a, 4a, 1b, 2b, 3b, 4b, 1a', 2a', 3a', 4a', 1b', 2b', 3b', 4b' are determined for each powder layer than there are scanners 106a, 106b, 106c, 106d in the apparatus and at least one of the scanners 106a, 106b, 106c, 106d is allocated to more than one lane-like irradiation zone 1a, 1b; 2a, 2b; 3a, 3b and 4a, 4b; 1a', 1b'; 2a', 2b'; 3a', 3b' and 4a', 4b' for the (a single) powder layer 104a, 104b. In the embodiment shown, for each powder layer 104a, 104b, each scanner 106a, 106b, 106c, 106d is allocated to the same number (in the example, two) lane-like irradiation zones 1a, 1b; 2a, 2b; 3a, 3b; 4a, 4b; 1a', 1b'; 2a', 2b'; 3a', 3b'; 4a', 4b'. However, this is not necessary and different scanners 106a, 106b, 106c, 106d may be allocated to a different number of lane-like irradiation zones. By allocating more than one irradiation zone 1a, 1b; 2a, 2b; 3a, 3b, 4a, 4b; 1a', 1b', 2a', 2b', 3a', 3b', 4a', 4b' in a powder layer 104a, 104b to a scanner 106a, 106b, 106c, 106d, the scanner 106a, 106b, 106c, 106d can be directed to irradiate areas to be consolidated in a one of the allocated irradiation zones within the powder layer 104a, 104b if another of the irradiation zones is unavailable for irradiating (because it has yet to be formed or is covered by the recoater 109 and/or by the next powder layer). Irradiation zones 1a, 1b and 1a', 1b' are allocated to a first scanner 106a, irradiation zones 2a, 2b; 2a', 2b' are allocated to a second scanner 106b, irradiation zones 3a, 3b; 3a', 3b' are allocated to a third scanner 106c, and irradiation zones 4a, 4b; 4a', 4b' are allocated to a fourth scanner 106d.

In Figure 4a, as powder layer 104a is formed, the irradiation zones become available for scanning in the order 1a, 2a, 3a, 4a, 4b, 3b, 2b, 1b. The scanners 106a, 106b, 106c, 106d begin scanning area(s) within irradiation zones 1a, 2a, 3a, 4a when these zones become available, the scanning of the area(s) to be consolidated and/or the stripe formation direction within each irradiation zone (see WO2014/125280 and WO2014/125258) ordered such that the scanning progresses in a direction opposed to the gas flow direction, G. These irradiation zones 1a, 2a, 3a, 4a are sized such that, typically, irradiation of the area(s) to be consolidated within these zones is only partially completed before irradiation zones 1b, 2b, 3b, 4b become available for scanning. When irradiation zones 1b, 2b, 3b, 4b become available for scanning, the allocated scanner 106a, 106b, 106c, 106d switches scanning to the irradiation zone 1b, 2b, 3b, 4b to ensure that scanning of the area(s) to be irradiated in these irradiation zones 1b, 2b, 3b, 4b is completed before the irradiation zone 1b, 2b, 3b, 4b is covered during formation of the next powder layer. The scanning in the zones 1b, 2b, 3b, 4b progresses in a direction opposed to the gas flow direction G.

On completion of irradiation of the area(s) to be consolidated within the corresponding irradiation zone 1b, 2b, 3b, 4b, the allocated scanner 106a, 106b, 106c, 106d switches back to the corresponding irradiation zone 1a, 2a, 3a, 4a to complete scanning of the area(s) within this zone 1a, 2a, 3a, 4a by progressing the scanning in a direction opposed to the gas flow direction G before the irradiation zone 1a, 2a, 3a, 4a is covered during formation of the next powder layer.

On completion of the irradiation zone 1a, 2a, 3a, 4a for powder layer 104a, the allocated scanner 106a, 106b, 106c, 106d switches to scanning the next powder layer 104b that is being/has been formed. Figure 4b shows the irradiation zones 1a', 2a', 3a', 4a', 1b', 2b', 3b', 4b' for powder layer 104b. As the starting and finishing location of the recoater 109 for powder layer 104b is reversed compared to the preceding layer 104a, the widths of the irradiation zones 1a', 2a', 3a', 4a', 1b', 2b', 3b', 4b'are altered in a corresponding manner. When a scanner completes irradiation of area(s) to be consolidated that fall within the corresponding irradiation zone 1a, 2a, 3a, 4a for powder layer 104a, the scanner 106a, 106b, 106c, 106d switches to scanning the corresponding irradiation zone 1a', 2a', 3a', 4a' of powder layer 104b. The scanners 106b, 106c, 106d allocated to irradiation zones 2a, 3a, 4a for powder layer 104a may switch to scanning the corresponding irradiation zone 2a', 3a', 4a' of powder layer 104b before the recoater 109 finishes forming powder layer 104b. As powder layer 104b is formed, the irradiation zones become available for scanning in the order 1a', 2a', 3a', 4a', 4b', 3b', 2b', 1b'. These irradiation zones 1a', 2a', 3a', 4a' are sized such that irradiation of the area(s) within these zones is, typically, only partially completed before irradiation zone 1b', 2b', 3b', 4b' allocated to the same scanner 106a, 106b, 106c, 106d becomes available for scanning. When irradiation zones 1b', 2b', 3b', 4b' become available for scanning, the allocated scanner 106a, 106b, 106c, 106d switches scanning to the irradiation zone 1b', 2b', 3b', 4b' to ensure that scanning of the area(s) to be consolidated in these irradiation zones 1b', 2b', 3b', 4b' is completed before the irradiation zone 1b', 2b', 3b', 4b' is covered during formation of the next powder layer 104a. The scanning in the irradiation zones 1b', 2b', 3b', 4b' is progressing in a direction opposed to the gas flow direction G.

On completion of the irradiation zone 1b', 2b', 3b', 4b', the allocated scanner 106a, 106b, 106c, 106d switches back to the corresponding region irradiation zone 1a', 2a', 3a', 4a' to complete scanning of the area(s) within this region 1a', 2a', 3a', 4a' by progressing the scanning in a direction opposed to the gas flow direction G before the irradiation zone 1a', 2a', 3a', 4a' is covered during formation of the next powder layer 104a.

On completion of the corresponding irradiation zone 1a', 2a', 3a', 4a' for powder layer 104b, the allocated scanner 106a, 106b, 106c, 106d switches to scanning the next powder layer 104a that is being/has been formed (in accordance with the scanning sequence described above with reference to Figure 4a).

In this way, an irradiation time for an irradiation zone 1b, 2b, 3b, 4b; 1b', 2b', 3b', 4b' closer to the finishing location of the recoater 109 is likely to be shorter than for an irradiation zone 1a, 2a, 3a, 4a; 1a', 2a', 3a', 4a' further from the finish location because the area(s) to be irradiated for each irradiation zone is likely to be smaller due to the irradiation zone 1b, 2b, 3b, 4b; 1b', 2b', 3b', 4b' being narrower than irradiation zone 1a, 2a, 3a, 4a; 1a', 2a', 3a', 4a'. Accordingly, irradiation zones 1b, 2b, 3b, 4b; 1b', 2b', 3b', 4b' closer to the finishing location of the recoater 109 will be completed quickly after being formed, reducing or minimising delays in the recoater 109 beginning formation of the next powder layer 104a, 104b. Furthermore, progression of the scanning in the lane-like irradiation zones 1a, 2a, 3a, 4a, 1b, 2b, 3b, 4b, 1a', 2a', 3a', 4a', 1b', 2b', 3b', 4b' in a direction opposed to the gas flow direction G limits or eliminates simultaneously irradiating two points, wherein one of the points is downstream of the other. As shown in Figures 4a and 4b, the irradiation areas may be allocated to the scanners 106a, 106b, 106c, 106d such that the total size of the irradiation areas allocated to each scanner 106a, 106b, 106c, 106d for each powder layer 104a, 104b is approximately the same. In this embodiment this is achieved by allocating both the widest irradiation area 1a, 4a' and the narrowest area 1b, 4b' to the same scanner 106a. 106d, allocating both the next widest irradiation area 2a, 3a' and the next narrowest area 2b, 3b' to the same scanner 106b, 106c and so on.

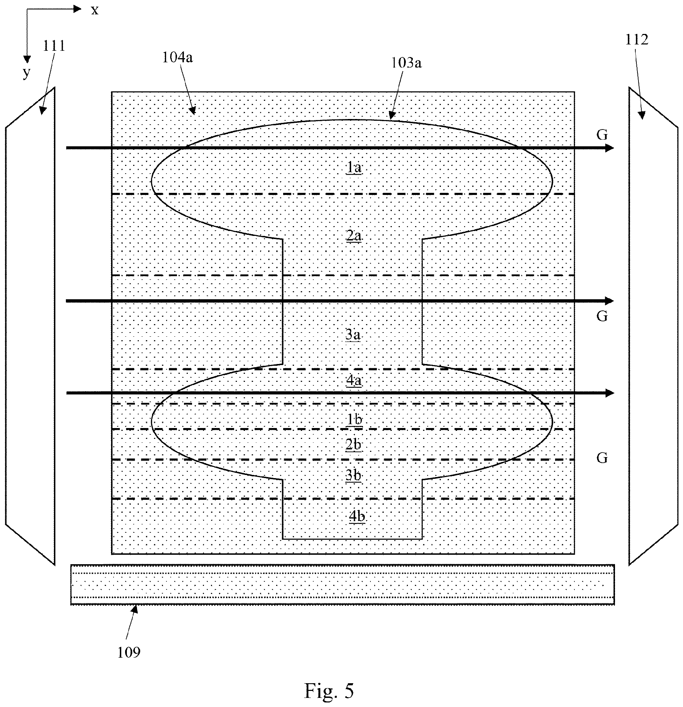

Referring to Figure 5, in a further embodiment, a width of each lane-like irradiation zone 1a, 2a, 3a, 4a, 1b, 2b, 3b, 4b is based on movement of the recoater 109 and the size of the area to be consolidated within each irradiation zone 1a, 2a, 3a, 4a, 1b, 2b, 3b, 4b. In particular, the total area of area(s) to be consolidated within an irradiation zone 1b, 2b, 3b, 4b, allocated to a scanner 106a, 106b, 106c, 106d, closer to the finishing location of the recoater 109 is smaller than the total area of area(s) to be consolidated in an irradiation zone 1a, 2a, 3a, 4a, allocated to the scanner 106a, 106b, 106c, 106d, further from the finishing location of the recoater 109. As illustrated, this may result in irradiation zones closer to the finishing location being wider than irradiation zones further from the finishing location depending on the shape of an area(s) to be consolidated. In this embodiment, the total area of area(s) to be consolidated within an irradiation zone is used as an indication of the irradiation time for the scanner to irradiate the area. However, other parameters could be used instead of or in addition to the total area as an indication of the irradiation time for the scanner to irradiate the area, such as a length of the periphery of the area(s), length of scan paths for scanning the area, length of jumps between end and start points of scan paths, etc.

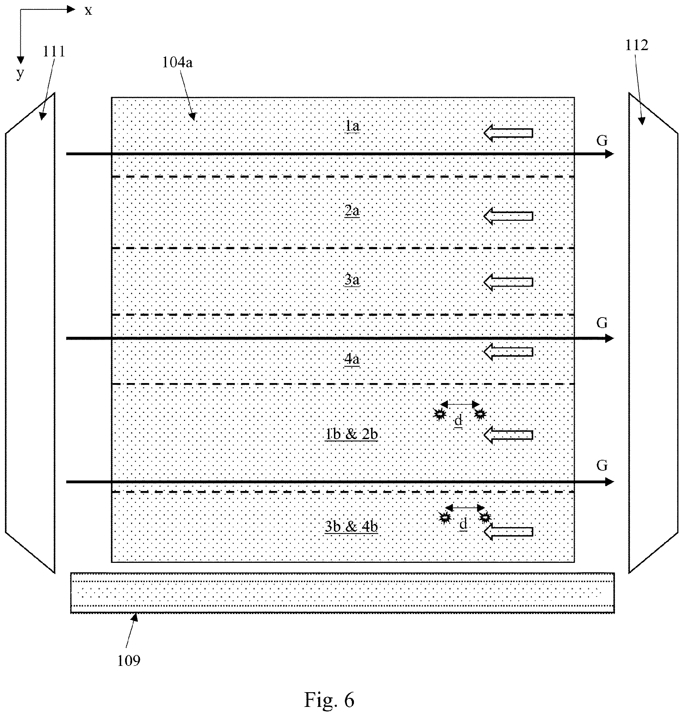

In a further embodiment shown in Figure 6, more than one scanner 106a, 106b, 106c, 106d is allocated to lane-like irradiation zones 1b & 2b and 3b & 4b closer to the finishing location of the recoater 109, potentially, breaking the preferred situation that a downstream point is not irradiated simultaneously with an upstream point, in order to achieve a required speed of irradiation within these irradiation regions. A part of sufficient quality may still be achieved if a downstream point is within a maximum separation distance, d, from an upstream point. WO2019211587, which is incorporated herein in its entirety, discloses a method of determining a downstream point for simultaneous irradiation with an upstream point and such a method may be used herein to sequence the scanners 106a, 106b, 106c, 106d allocated to the same lane-like irradiation zone 1b & 2b; 3b & 4b.

It has been found that, in a multi-laser beam process, such as that carried out in the RenAM 500Q powder bed fusion machine, when a downstream point on the powder bed is exposed simultaneously with an upstream point and is within a maximum separation distance, the quality of the solidified downstream point is substantially unaffected by the gas-borne debris generated by the exposure of the upstream point. Outside of these acceptable boundaries, the simultaneous processing of the two points on the powder bed can affect the quality of the solidified downstream point. Accordingly, the downstream point may be a point within a gas-borne debris zone. The gas-borne debris zone may be a zone of the powder bed across which gas-borne debris generated by the solidification of the upstream point is deemed to be carried by the gas flow. The gas-borne debris zone may be determined based upon the location of the upstream point.

In some builds, an effect of condensate and spatter on the quality of downstream processing may not be a concern, for example if the material being melted generates little condensate and/or spatter, if the gas flow removes the spatter and/or condensate well enough to prevent unacceptable adverse effects, and/or if adverse effects of the condensate and/or spatter are acceptable for the build. In such a scenario, the irradiation zones may be determined without regard to the gas flow direction G. Furthermore, it may not be possible to define lane-like irradiation zones for each scanner because a working field of each scanner may not extend across the entire powder bed 104 in a direction of the gas flow G.

Figures 7a and 7b illustrate an example of how irradiation zones may be determined for each powder layer 104a, 104b. In Figures 7a and 7b, a working field of each scanner 106a, 106b, 106c, 106d in the x- and y-directions is illustrated by 130ₓ₁, 130ₓ₂, 130yi, 130_{y2}. The working field for scanner 106a is an area defined by 130ₓ₁ and 130yi, the working field for scanner 106b is an area defined by 130ₓ₂ and 130yi, the working field for scanner 106c is an area defined by 130ₓ₁ and 130_{y2} and the working field for scanner 106d is an area defined by 130ₓ₂ and 130_{y2}. The irradiation zones 1, 2, 3, 4 for powder layer 104a and 1', 2', 3', 4' for powder layer 104b are determined such that irradiation zone falls within the working field of the allocated scanner 106a, 106b, 106c, 106d. A size of each irradiation zone 1, 2, 3, 4; 1', 2', 3', 4' is based on a finishing location of the recoater 109 when forming the corresponding powder layer 104a, 104b. In this embodiment, the irradiation zones are determined 1, 2, 3, 4; 1', 2', 3', 4' such that an irradiation time for completing irradiation of area(s) within irradiation zones 3, 4 and 1', 2' closer to a finishing location of the recoater 109 when forming the powder layer 104a, 104b is less than for irradiation zones 3, 4 and 1', 2' further from the finishing location. In this embodiment, the size of the irradiation zone is based on a total area of an area/areas to be consolidated that falls within each irradiation zone 1, 2, 3, 4; 1', 2', 3', 4'. In particular, the total area of the area(s) that fall within each irradiation zone 1, 2, 3, 4; 1', 2', 3', 4' is smaller for irradiation zones 3, 4 and 1', 2' closer to a finishing location of the recoater 109 when forming the powder layer 104a, 104b than for irradiation zones and 1, 2 and 3', 4' further from the finishing location.

This may reduce or minimise delays in the recoater moving to start the formation of the next powder layers 104a, 104b.

To consolidate powder of a layer 104a, as each irradiation zone 1, 2, 3, 4 becomes available for scanning and the recoater 109 has moved far enough to enable scanning of at least part of the irradiation zone 1, 2, 3, 4, the allocated laser scanner 106a, 106b, 106c, 106d begins scanning the laser beam 118a, 118b, 118c, 118d across the irradiation zone 1, 2, 3, 4. On completion of scanning of the irradiation zone 1, 2, 3, 4 in powder layer 104a, the laser scanner 106a, 106b, 106c, 106d begins scanning the laser beam 118a, 118b, 118c, 118d across the irradiation zone 1', 2', 3', 4' of the next powder layer 104b. On completion of scanning of the irradiation zone 1', 2', 3', 4', the laser scanner 106a, 106b, 106c, 106d begins scanning the laser beam 118a, 118b, 118c, 118d across the irradiation zone 1, 2, 3, 4 of the next powder layer 104a and so on. It will be understood that a size and shape of the irradiation zones 1, 2, 3, 4 may vary for each powder layer 104a, for example because of variations in the geometry of the slice 103a to be consolidated, and a size and shape of the irradiation zones 1', 2', 3', 4' may vary for each powder layer 104b, for example because of variations in the geometry of the slice 103b to be consolidated.

The irradiation zones 1, 2, 3, 4; 1', 2', 3', 4' are not determined based on a gas flow direction. In one embodiment, gas flow direction may not be taken into account when determining a scanning sequence for each irradiation zone 1, 2, 3, 4; 1', 2', 3', 4'. However, the scanning is sequenced (ordered) such that scanning of each irradiation zone 1, 2, 3, 4; 1', 2', 3', 4' begins in a portion first formed by the recoater 109, progresses in the recoater direction W₁, W₂ for that powder layer 104a, 104b to a portion last formed by the recoater 109 and then progresses back in a recoater direction W₁, W₂ for the next powder layer 104b, 104a (this is illustrated by the curved arrows across each irradiation zone 1, 2, 3, 4; 1', 2', 3', 4'). In this way, at least some of the irradiation zones 1, 2, 3, 4; 1', 2', 3', 4' are scanned when the recoater 109 is forming powder layer 104a and when the recoater 109 is forming powder layer 104b. Furthermore, the sequencing of the scanning ensures that scanning of portions of the irradiation zones 1, 2, 3, 4; 1', 2', 3', 4' are completed before the areas are covered during formation of the next powder layer 104a, 104b whilst ensuring that the allocated scanner 106a, 106b, 106c, 106d has an area available for scanning either on the powder layer 104a, 104b that has been formed or the powder layer 104a, 104b that is being formed by the recoater 109. The sequencing may comprise selecting an order in which defined portions (scanning units) of each irradiation zone 1, 2, 3, 4; 1', 2', 3', 4'are scanned. For example, scanning of the consolidated area may be divided into stripes or a chequerboard pattern, as is known in the art, and these stripes or squares of the chequerboard may act as the scanning units that are ordered. Accordingly, the method may comprise selecting an order in which the stripes or squares that fall within the irradiation zone 1, 2, 3, 4; 1', 2', 3', 4'are scanned. However, it will be understood that other scanning units may be ordered, such as groups of stripes or squares or individual scan paths.

The order in which scanning units of the irradiation zones 1, 2, 3, 4; 1', 2', 3', 4' are selected for scanning may take into account as gas flow direction, G. In particular, the method may comprise selecting to first scan the scanning units of the irradiation zones 1, 2, 3, 4; 1', 2', 3', 4' that are further downstream in the gas flow direction before scanning units that are further upstream in the gas flow direction. The combination of selecting the order in which the scanning units are scanned based both on wiper direction W₁, W₂ and gas flow direction G may result in an ordering of the scanning units generally indicated by the curved arrows. Scanning may start from the unit that is closest to the starting location of recoater 109 when forming the powder layer 104a, 104b and/or the unit that is furthest upwind and/or the unit determined from a combination of these two factors. For example, if the unit that is closest to the starting location of recoater 109 is not the furthest upwind a selection algorithm will resolve conflicts between the requirements if both requirements cannot be met. For example, the algorithm may allocate a weighting to each requirement and decide an irradiation order based on a sequence that minimises a penalty score calculated based on the weightings.

Simultaneous scanning of a downstream point and an upstream point, wherein that laser beam passes through the gas-borne debris generated by scanning of the upstream point in order to scan the downstream point may be acceptable if the downstream point is within a maximum separation distance, d, from an upstream point as described in WO2019211587. Such a scenario may be achieved with the scanning sequence described above even though one irradiation zone 1, 1', 3, 3' is downstream of another irradiation zone 2, 2', 4, 4' if the scanning of both irradiation zones is sequenced appropriately. If it is not possible to maintain the simultaneous scanning within the distance, d, using one irradiation zone per scanner 106a, 106b, 106c, 106d, a plurality of irradiation zones per scanner 106a, 106b, 106c, 106d may be provided across the slice 103a, 103b to be consolidated in the gas flow direction, G, each irradiation zone allocated to a one of the scanners 106a, 106b, 106c, 106d alternating with an irradiation zone allocated to another one of the scanners 106a, 106b, 106c, 106d. An example of this is shown in Figure 8, wherein the irradiation zones allocated to each scanner 106a, 106b, 106c, 106d are scanned in the order a to c.

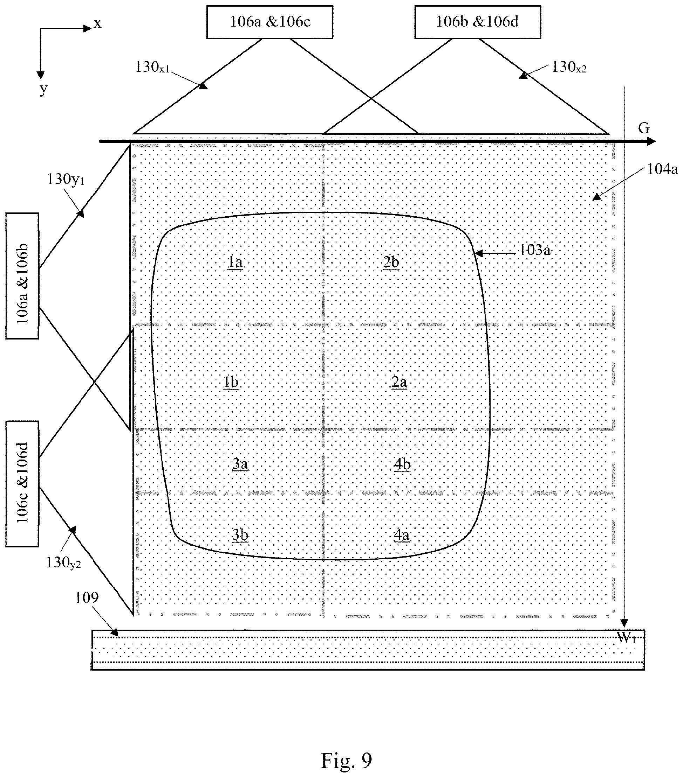

Figure 9 illustrates a further embodiment of the invention where gas flow G is taken into account to avoid irradiating a region downstream of another irradiated region for scanners 106a, 106b, 106c, 106d having a working field that does not cover the entire powder bed. In this embodiment, two or more irradiation regions are allocated to each scanner 106a, 106b, 106c, 106d. Irradiation of the irradiation regions is sequenced such that, when an upwind irradiation region 1a, 1b, 3a, 3b is being irradiated, any downwind irradiation region 2a, 2b, 4a, 4b that is irradiated at the same time is not downstream of the upwind irradiation region 1a, 1b, 3a, 3b. In the example shown in Figure 9, when upstream irradiation regions 1a and 3a are irradiated, downwind irradiation regions 2a and 4a are irradiated that are offset in the gas flow direction G so as not to be downstream (i.e. within the gas-borne debris) of upwind irradiation regions 1a and 3a. When the scanners 106a and 106c irradiate upstream irradiation regions 1b and 3b respectively, scanners 106b and 106d irradiate downstream irradiation regions 2b and 4b so as not to be downstream (i.e. within the gas-borne debris) of upwind irradiation regions 1b and 3b. Such a scanning sequence may result in irradiation of regions onto which debris from a previously irradiated upwind region(s) has fallen, but such a compromise may be acceptable. Processing through gas-borne debris may be more detrimental to part quality than remelting debris that has fallen onto the powder bed.

For ease of sequencing, it may be desirable for areas that are simultaneously irradiated, for example 1a and 2a, and 3a and 4a, to be approximately the same size such that irradiation time for irradiations regions 1a and 2a, and 3a and 4a are substantially the same. However, irradiation regions 3a, 3b, 4a and 4b closer to a finishing location of the recoater 109 for the powder layer 104a are determined, for example are smaller than irradiation regions 1a, 1b, 2a, 2b further from the finishing location, such that the irradiation time for irradiating irradiation regions 3a, 4a, 4a, 4a is shorter than for irradiation regions 1a, 1a, 2a, 2b. In this way, delays in movement of the recoater for forming the next powder layer 104b can be reduced or avoided altogether. For the next powder layer, scanners 106c and 106d may be allocated irradiation regions that take a longer time to irradiate then irradiation regions allocated to scanners 106a and 106b such that any difference in irradiation time for the two powder layers combined is less than for each powder layer individually, i.e. within the difference threshold and/or substantially equal. Across a plurality of powder layers, the irradiation regions are determined such that a difference in irradiation time for each scanner 106a, 106b, 106c, 106d tends to a common value, e.g. zero.

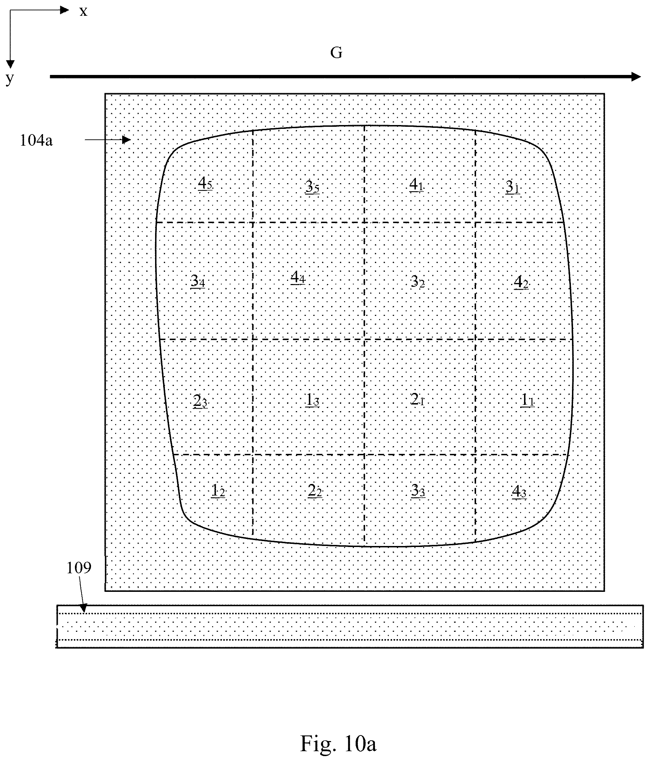

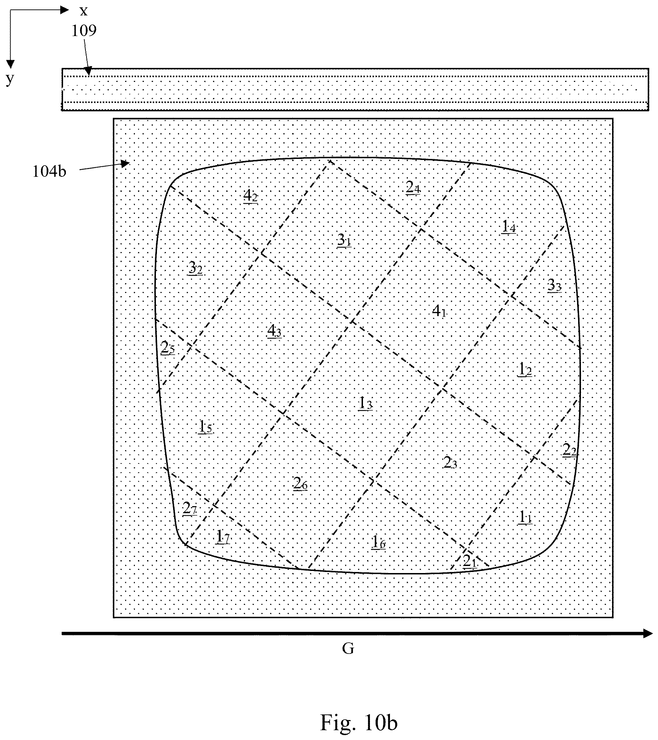

Figures 10a and 10b show a further embodiment, wherein a slice 103a, 103b to be consolidated within a powder layer 104a, 104b is divided into equal sized irradiation zones (other than when an irradiation zone is bisected by a border of the slice 103a, 103b to be consolidated). (In Figure 10a, irradiation zones 1₁, 1₂, 1₃, 2₁, 2₂, 2₃, 3₁, 3₂, 3₃, 3₄, 3s, 4₁, 4₂, 4₃, 4₄, 4₅ and in Figure 10b irradiation zones 1₁', 1₂', 1₃', 1₄', 1₅', 1₆', 1₇', 2i', 2₂', 2₃', 2₄', 2₅', 2₅', 2₇', 3₁', 3₂', 3₃', 4₁', 4₂', 4₃'.) In this embodiment, the slice 103a, 103b is divided into a grid of squares (referred to hereinafter as a chequerboard). The chequerboard pattern may conform to the squares of the chequerboard pattern used to define raster scan path lengths across the slice 103a. 103b to be consolidated (a width of each square setting a length of scan paths) or may be defined separately from the scan path lengths (e.g. the scan path lengths may be defined by smaller squares or by stripes across the squares). Accordingly, the irradiation zones are not determined by a finishing location of the recoater 109 when forming the powder layer 104a, 104b but by a pre-set size of the grid (e.g. squares) and a geometry of the slice 103a, 103b to be consolidated.

A number of the irradiation zones allocated to each scanner 106a, 106b, 106c, 106d is determined, at least in part, on a finishing location of the recoater 109 when forming the corresponding powder layer 104a, 104b. In particular, a group of the irradiation zones 1₁, 1₂, 2₂, 3₃, 4₃, 1₄', 2₄', 3₁', 4₂' closer to the finishing location of the recoater 109 may be allocated to a greater number, such as all, of the scanners 106a, 106b, 106c, 106d, to minimise the time it takes to irradiate these irradiation zones such that irradiation of these zones is completed before the recoater 109 covers these zones during formation of the next powder layer 104b, 104a, compared to a group of the irradiation zones 3₁, 3₂, 3₄, 3s, 4₁, 4₂, 4₃, 4₅, 1₁', 1₂', 1₃', 1₅', 2₁', 2₂', 3₃', 3₆', 2₇' further from the finishing location, which in this example have only been allocated to two of the scanners 106a, 106b, 106c, 106d. Accordingly, within one powder layer 104a, 104b, the number of irradiation zones allocated to each scanner 106a, 106b, 106c, 106d may be unequal. However, across two or more powder layers 103a, 103b, the number (or percentage) of irradiation zones allocated to each scanner 106a, 106b, 106c, 106d will tend to a common value. For example, the percentage of irradiation zones allocated to each scanner 106a, 106b, 106c, 106d may tend to or be equal to 100x(1/number of scanners). So for four scanners 106a, 106b, 106c, 106d, the percentage of irradiation zones allocated to each scanner 106a, 106b, 106c, 106d will tend towards or be equal to 25% as more powder layers 104a, 104b are considered. In this way, times in which the scanners are not being utilised are reduced. However, due to more than one powder layer 104a, 104b being available for scanning during a stroke of the recoater 109 across the powder bed, it is not a requirement for the irradiation time for each scanner 106a, 106b, 106c, 106d to be the same for any one powder layer 104a, 104b.

As shown in Figures 10a, 10b, the pattern of irradiation zones may be rotated between powder layers 104a, 104b. The angle of rotation may be an angle other than 0°, 90° 180° and 270°. Alternatively or additionally, the pattern irradiation zones may be translated by a distance that is not an integer multiple of the width of the squares. This may avoid lines of weakness, which may occur if the boundaries between irradiation zones align across multiple powder layers 104a, 104b.

For powder layer 104a, the scanner 106a, 106b, 106c, 106d allocated to the group of irradiation zones 1 irradiates the irradiation zones in the order 1₁, 1₂, 1₃. the scanner 106a, 106b, 106c, 106d allocated to the group of irradiation zones 2 irradiates the irradiation zones in the order 2₁, 2₂, 2₃. The scanner 106a, 106b, 106c, 106d allocated to the group of irradiation zones 3 irradiates the irradiation zones in the order 3₁, 3₂, 3₃, 3₄, 3₅ and the scanner 106a, 106b, 106c, 106d allocated to the group of irradiation zones 4 irradiates the irradiation zones in the order 4₁, 4₂, 4₃, 4₄, 4₅.

For powder layer 104b, the scanner 106a, 106b, 106c, 106d allocated to the group of irradiation zones 1 irradiates the irradiation zones in the order 1₁', 1₂', 1₃', 1₄', 1₅', 1₆', I₇'. the scanner 106a, 106b, 106c, 106d allocated to the group of irradiation zones 2 irradiates the irradiation zones in the order 2₁', 2₂', 2₃', 2₄', 2₅', 2₆', 2₇'. The scanner 106a, 106b, 106c, 106d allocated to the group of irradiation zones 3 irradiates the irradiation zones in the order 3₁', 3₂', 3₃' and the scanner 106a, 106b, 106c, 106d allocated to the group of irradiation zones 4 irradiates the irradiation zones in the order 4₁^{'}, 4₂^{'}, 4₃^{'}.

Accordingly, a group 1, 2 of irradiation zones has a smaller number of irradiation zones for one powder layer 104a than group 3, 4 but a larger number than groups 3 and 4 for another (the successive) powder layer 104b. Accordingly, a percentage difference in irradiation time for each scanner 106a, 106b, 106c, 106d for two or more powder layers 104a, 104b is less than the percentage difference in irradiation time for each scanner 106a, 106b, 106c, 106d of a (and possibly each) powder layer 104a, 104b that is formed using bidirectional recoating.

For powder layer 104a, irradiation of the irradiation zones is sequenced such that an irradiation zone 3₁ of the group of irradiation zones 3 and irradiation zone 4₁ of the group of irradiation zones 4 is irradiated by the allocated scanner 106a, 106b, 106c, 106d as soon as the zone becomes available for scanning and before the recoater 109 has finished forming the powder layer 104a. During this time, the scanners 106a, 106b, 106c, 106d allocated to the group of irradiation zones 1 and 2 will be scanning irradiation zones of a previous powder layer 104b. On completion of irradiation of an irradiation zone within group 3, 4, the allocated scanner 106a, 106b, 106c, 106d commences irradiation of the next irradiation zone in the group 3,4. At a certain time during formation of the powder layer 104a, irradiation zones 1₁ and 2₁ become available for irradiating and all scanners 106a, 106b, 106c, 106d will irradiate powder layer 104a at the same time. Irradiation zones 1₂, 2₂, 3₃, 4s closest to the finishing location of the recoater 109 when forming powder layer 104a may all be irradiated simultaneously to reduce the time it takes to complete irradiation of the area of the slice 103a closest to the finishing location of the recoater 109 compared to areas of the slice 103a further from the finishing location. This is desirable because these irradiation zones have the shortest time available for irradiation before these irradiation zones are covered by the recoater 109 during formation of the next powder layer 104b.

On completion of irradiating the irradiation zones 1₂, 2₂, 3₃, 4₃ closest to the finishing location, the scanners 106a, 106b, 106c, 106d irradiate irradiation zones 1₃, 2₃, 3₄, 4₄, 3₅, 4₅ further from the finishing location. The scanners 106a, 106b, 106c, 106d allocated to groups 1 and/or 2 may commence irradiating the next powder layer 104b (starting with irradiation zones 1₁', 2₁') before scanners 106a, 106b, 106c, 106d have completed irradiating all of the irradiation zones within the groups 3 and 4.

Powder layer 104b is irradiated in a similar manner based on the sequence of irradiation zones but rather than irradiating starting and ending with groups 3 and 4, powder layer 104b starts and ends with irradiation of irradiation zones in groups 1 and 2 with the irradiation zones of groups 3 and 4 occurring as the recoater 109 comes to the end of forming powder layer 104b and before being covered by the recoater 109 on formation of the next powder layer 104a.

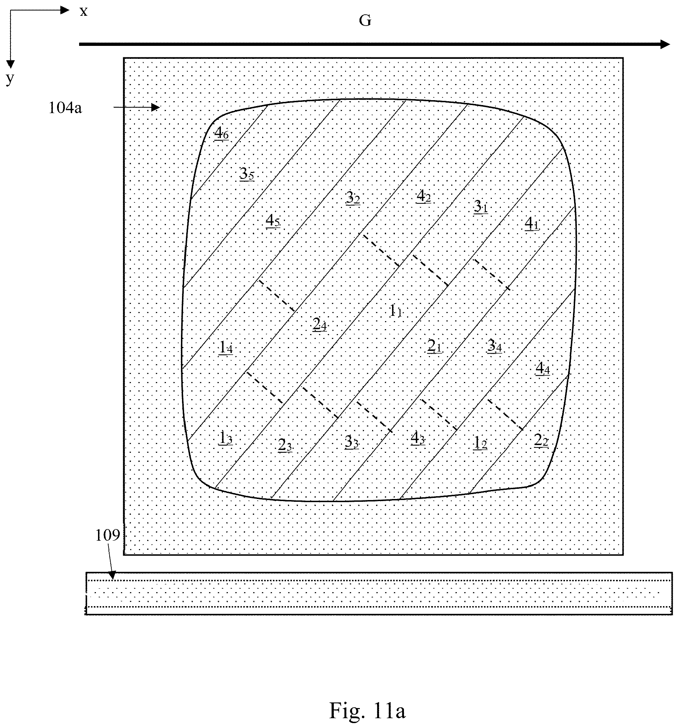

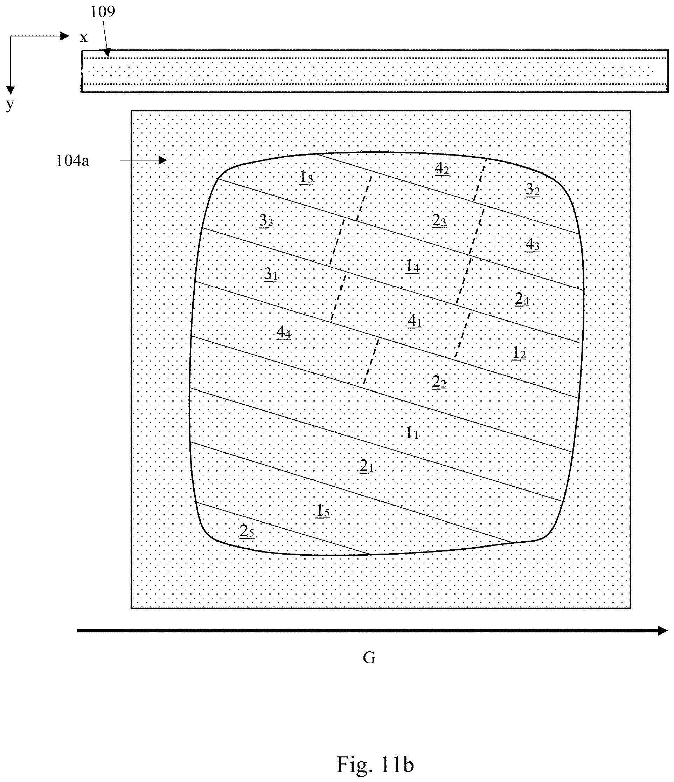

Figures 11a and 11b show a further embodiment that is similar to the embodiment described with respect to Figures 10a and 10b but rather than a grid of squares, the slice 103a, 103b is divided into stripe sections to define the irradiation zones. (In Figure 11a, irradiation zones 1₁, 1₂, 1₃, 1₄, 2₁, 2₂, 2₃, 2₄, 3i, 3₂, 3₃, 3₄, 3₅, 4₁, 4₂, 4₃, 4₄, 4s, 4₆ and in Figure 11b irradiation zones 1₁', 1₂', 1₃', 1₄', 1₅', 2i', 2₂', 2₃', 2₄', 2₅', 3₁', 3₂', 3₃', 4₁', 4₂', 4₃', 4₄'.) The subscript indicates the order in which the stripes are irradiated in each powder layer 104a, 104b. The stripes may conform to the stripes of a stripe pattern used to define raster scan path lengths across the slice 103a. 103b to be consolidated (a width of each stripe setting a length of scan paths). Like the squares, the stripe formation direction (longitudinal direction of the stripes) is rotated between powder layers 104a, 104b. In this embodiment, the length of the stripe sections is determined based on a finishing location of the recoater 109 when forming the corresponding powder layer 104a, 104b, with longer stripe lengths for irradiation zones further from the finishing location than for irradiation zones closer to the finishing location. However, in an alternative embodiment, all stripe lengths are the same or defined by a geometry of the slice 103a, 103b if the stripe meets a border of the slice 103a, 130b and a number of stripe sections allocated to each scanner 106a, 106b, 106c, 106d is determined based on a finishing location of the recoater 109 when forming the corresponding powder layer 104a, 104b.

In the embodiments shown in Figures 10a and 10b, 11a and 11b the squares or stripes may be irradiated by progressing the laser beam in a formation direction across the square or stripe that is opposed to the gas flow direction. The formation direction is a direction in which smaller scanning units, such as scan paths, within the irradiation zone are ordered to be irradiated by the allocated scanner 106a, 106b, 106c, 106d.

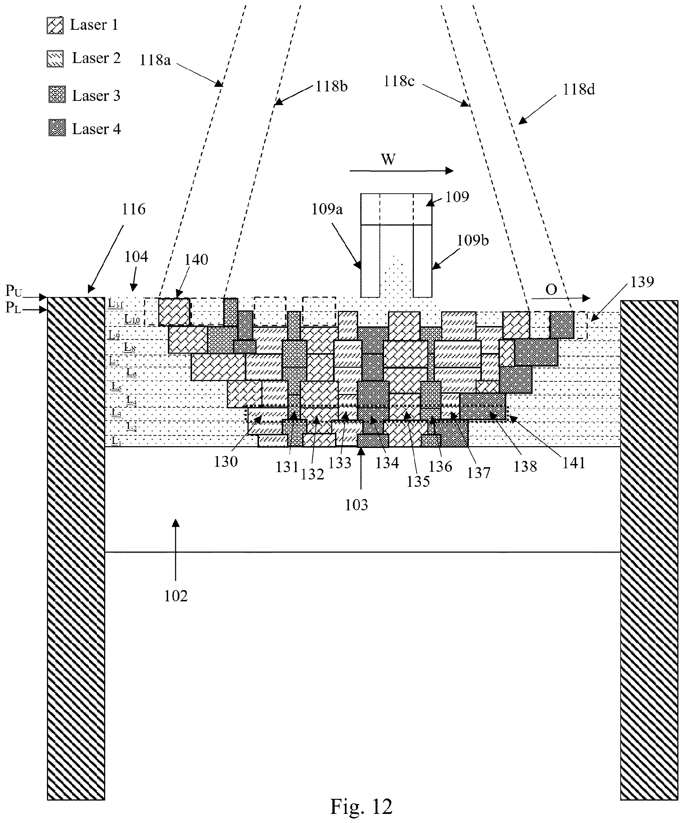

A further embodiment of the invention is shown in Figure 12. In this embodiment, a plurality of regions of each powder layer L₁ to L₁₁ are consolidated to form together a consolidated section within the powder layer by melting powder of each region together with powder of at least one other powder layer through the irradiation of the powder bed by the laser beam 118a, 118b, 118c, 118d. To achieve this end, powder layers L₁ to L₁₁ have a thickness that is half or less than half a maximum layer thickness to be consolidated (e.g. melted) with the laser beams 118a, 118b, 118c, 118d. By this method, an irradiation time per powder layer can be reduced ensuring that irradiation of each powder layer L₁ to L₁₁ can be completed before the regions to be irradiated are covered by the recoater 109 during formation of the next powder layer.

An example of this method will now be described with reference to powder layer L₃. A consolidated section 141 of powder layer L₃ is formed by consolidated blocks 130 to 138. Each consolidated block 130 to 138 consolidates a region of powder layer L₃ together with a region in either powder layer L₂ or powder layer L₄. Each block 130, 132, 134, 136 and 138 is formed by directly irradiating powder layer L₃ with one of the laser beams 118a, 118b, 118c, 118d with laser parameters that are sufficient to melt both the powder layer L₃ and the powder layer L₂ such that when the molten material solidifies the consolidated block is formed. Each block 131, 133, 135, and 137 is formed by directly irradiating powder layer L₄ with one of the laser beams 118a, 118b, 118c, 118d with laser parameters that are sufficient to melt both the powder layer L₄ and the powder layer L₃ such that when the molten material solidifies the consolidated block is formed. Hence, consolidated section 141 in each powder layer is formed from regions consolidated by directly irradiating the powder layer and from regions consolidated by directly irradiating a later (such as the next) powder layer. Accordingly, the irradiation time for each powder layer is reduced compared to consolidating all of the regions through direct irradiation of the powder layer. Another way to consider this embodiment is that irradiation for each powder layer is spread across two or more strokes of the recoater 109 across the powder bed 104. The number of strokes of the recoater 109 may be increased but, as the two layers are consolidated by an exposure, the irradiation time for forming the object is the same or at least comparable to forming an object when powder layers are formed at twice the layer thickness. There is no or little penalty in build time if the irradiation time for each powder layer is greater than the time it takes for the recoater to complete a stroke across the powder bed, which is generally the case. However, as consolidation of a powder layer is completed even after the powder layer has been covered by the next powder layer it may not be necessary to prioritise irradiation of regions of the powder layer that are close to a finishing location of the recoater when forming the powder layer. If a region remains unconsolidated even after being covered by the next powder layer, it can be consolidated when irradiating the next powder layer.

Furthermore, the method may allow preferred spacing and ordering of the irradiations, for example relative to a gas flow direction, to be maintained because there is no longer a requirement to complete consolidation of a powder layer before the regions to be consolidated are covered during formation of the next powder layer. The method may also reduce or even eliminate significant residual stresses due to shrinkage of the consolidated material. Voids created by the gathering of powder during melting of material may be filled before the melting of further regions within a powder layer. Accordingly, the method may both mitigate warping of the object and the presence of pores within the object. In addition, a mass of powder consolidated when forming each region extends across different sets of layers for different regions (e.g. the blocks 130, 132, 124, 126, 138 are offset relative to adjacent (i.e. directly neighbouring) blocks 131, 133, 135, 137) potentially reducing lines of weakness caused by the prior art method of consolidating all (or a majority) of regions of a layer immediately after forming the powder layer.

In this embodiment, some of the blocks, such as blocks 132, 134 and 136, are formed having a non-uniform thickness, for example a T-like shape. This may be achieved by adjusting a penetration depth of the laser beam. The penetration depth may be altered by adjusting an energy density of the irradiation (for example, by adjusting the laser and/or scanning parameters, such as laser power). The laser and/or scanning parameters may be adjusted from those suitable for consolidating a single powder layer thickness to those suitable for consolidating a thickness of powder equivalent to two or more powder layers. Suitable laser and/or scanning parameters are used that result in consolidated material that is more than 99%, and preferably more than 99.9%, of theoretical fully dense material. The adjustment may be a step-change (as illustrated) or a gradual change. In this way, lines of weakness in the build direction (vertical direction) are avoided.

The method may comprise selecting to form the blocks 130, 138, 139 that comprise an overhanging region of the object 103 such that a component of a recoater 109 direction W when forming the next powder layer across the overhanging part 130, 138, 139 is in an overhang direction, O. The overhang direction, O, is a vector normal to an edge of an area of the object to be formed in the powder layer having a direction from consolidated material of the area to powder. In the example shown in Figure 11, block 139 is consolidated by irradiating layer L₁₀ and forms an overhanging part of the object 103. The overhanging part has an overhang direction O. The movement direction W of the recoater 109 when forming the next powder layer L₁₁ that covers the overhanging part is in (or at least has a component in) the overhang direction O. Block 140 forms an overhang part having on overhang direction in an opposed direction to that of block 139. Accordingly, powder layer L₁₁ is irradiated to form block 140. In the example, wherein a bidirectional recoater 109 is used, powder layer L₁₁ is formed by movement of the recoater in a recoater direction having a component opposed to the overhang direction of block 140. Any consolidated section of a powder layer will have overhanging parts with opposed overhang directions. Accordingly, the overhang parts for a powder layer will transition from those to be consolidated by directly irradiating the powder layer to those to be consolidated by irradiating the next powder layer. Such a method may reduce or eliminate detrimental effects resulting from the parts of the overhang catching on the recoater 109 as the recoater 109 is moved over the powder bed during formation of the subsequent powder layer. For example, movement of the recoater across a thin layer of consolidated material in a direction opposed to the overhang direction may move or otherwise detrimentally effect the thin layer, for example due to the recoater pushing powder underneath the thin layer, whereas movement of the recoater in the other direction may avoid such detrimental effects.

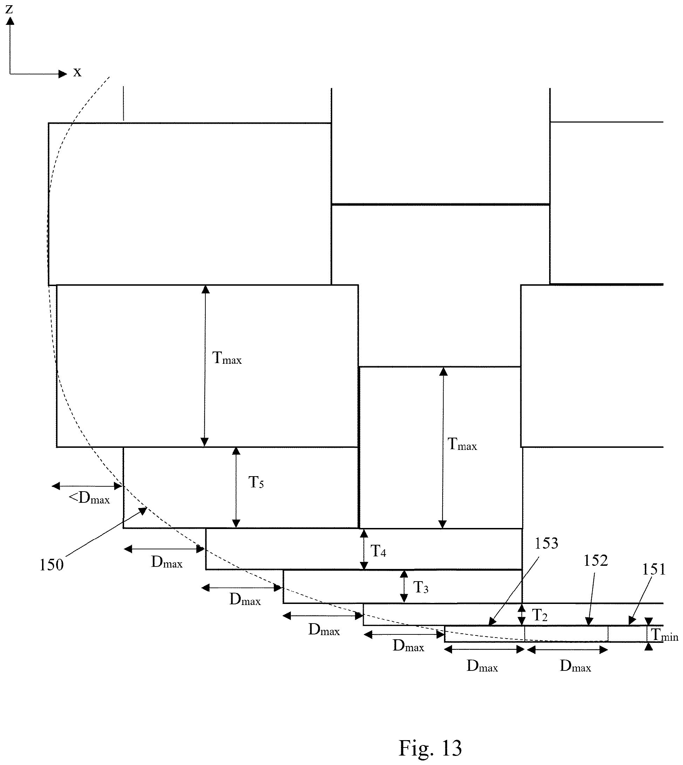

A further embodiment of the invention is shown in Figure 13. In this embodiment, a powder layer thickness is selected based on a geometry of a surface of the object 103 (referred to hereinafter as "variable layer thickness"). This embodiment is illustrated and will be described hereinafter in connection with a bidirectional recoater 109, however, it will be understood that the variable layer thickness could also be implemented with a recoater that spreads powder layers in only a single direction. Furthermore, variable layer thickness may be implemented wherein irradiation is not carried out when moving the recoater across the powder bed to form powder layers (e.g. not scanning whilst wiping). However, the preferred embodiment is that areas of powder layers are irradiated whilst powder layers are being formed.

The dotted line 150 represents a desired geometry of an object to be formed. Build preparation software slices the geometry into layers to be formed in the powder bed fusion process, wherein the layers have a thickness based on a geometry 150 of the object. In this embodiment, the layer thickness is based on a shallowness of an overhanging part of the object to the build plane 110. A thickness for a slice is determined based on a layer thickness, up to a maximum layer thickness Tₘₐₓ, that results in overhanging parts of the slice having a length up to a maximum length Dₘₐₓ. As the angle of the overhanging surface on the object increases, thicker layers can be used whilst still meeting this requirement. This is illustrated in Figure 13, wherein the layer thickness increases from Tₘᵢₙ to Tₘₐₓ over successive layers. Tₘᵢₙ may be 0µm. Accordingly, for very shallow angled overhanging parts of the geometry and/or for overhanging parts that of the geometry that are parallel to the build plane 110, a slice may be formed in a series of sections 151, 152, 153 each of which has a maximum length of Dₘₐₓ, wherein between forming each section 151, 152, 153, a powder layer is formed by the recoater 109 at the same height as the previous powder layer. For example, first section 151 may be formed as this section is connected to consolidated material of a previous (lower) layer. A powder layer is then formed (reformed) at the same height as the previous layer and then the powder layer is irradiated to form section 152. A powder layer is then formed (reformed) at the same height as the previous layers and then the powder layer is irradiated to form section 153. By confining the maximum length of the overhanging part of a slice, excessive heat build-up and therefore, deformation or curling of the object can be avoided that may result in failure of the build. Furthermore, for zero-thickness layers, powder that is denuded during irradiation of the powder layer is replenished before the powder layer is irradiated to form the next section of that slice.

The maximum length, Dₘₐₓ may be less than the width of a single track of consolidated material (e.g. width of a single weld) created by irradiating the powder. Accordingly, each section 151, 152, 153 of the overhang may be formed by scanning one of the laser beams along a single scan path (contour) that extends around at least part of the material that has already been consolidated in the or a previous powder layer such that the material consolidated by the scan of the contour is joined to the previously consolidated material. In ensure the consolidated material is joined to previously consolidated material, the track of consolidated material created by irradiating the scan path will overlap with material that has already been consolidated such that the section of the overhang is connected to part of the object already built. As a result, a length of the section of the overhang will be less than a width of the track created by scanning along the contour.

To determine the area and/or contour(s) to be scanned in a powder layer, a programme first determines the layer thicknesses required based on the shallowest angled overhang at each z-height (distance in the build direction) and determines slices of these layer thicknesses. Alternatively, slices are determined for a minimum layer thickness, such as 10µm. One or more complete (closed) contours are then determined for each slice. It is determined whether there are sections of the or each contour that can be consolidated by irradiating a later powder layer, for example, because the overhang at that location is below a threshold distance, Dₘᵢₙ /above a threshold angle. For example, sections of the area or contour(s) that are between the minimum distance Dₘᵢₙ and Dₘₐₓ may be consolidated by irradiating the current layer, whereas shorter sections of the area or contour(s) that are below the minimum distance Dₘᵢₙ may not be irradiated in the current powder layer. Material in these shorter sections may be consolidated by irradiating a contour in a later powder layer. As a result, the contour that is scanned by irradiating a layer may be open (only a part of the originally determined closed contour). Sections, such as 152 and 153 of the area or contour(s) that are above Dₘₐₓ may be consolidated by irradiating a layer powder layer of zero-thickness, i.e. a powder layer reformed at the same z-height as the previous powder layer.

The laser parameters (such as laser power) and/or scanning parameters may be changed for different layer thicknesses. For example, the laser parameters and/or scanning parameters may be adapted to reduce the energy density for thinner layers. This reduction in energy density may help to avoid overheating in the overhanging regions, where the cooling rate may be lower compared to a core of the object.

As shown in Figure 13, parts of the object that do not form a surface of the object (i.e. the core of the object) may be formed at the maximum allowed layer thickness Tₘₐₓ. The core of the object may be formed from offset blocks as described with reference to Figure 12. Irradiating thicker regions of the powder within the core may result in faster builds compared to processing the core at the same layer thickness as the overhangs but, for parts of the core above overhangs, it may help to mitigate overheating of the overhang regions during the irradiation of later layers, which could result in build failure.

To form the powder layers having a thickness less than the maximum layer thickness Tₘₐₓ, the recoater 109 may not move across the entire powder bed 104 but may only spread powder in the locality of the area to be consolidated (e.g. in the overhang region and a region overlapping with the consolidated material in the layer below). Accordingly, delays in the build that may be caused by the formation of these thinner layers may be reduced or minimised. This method is facilitated by the use of a bidirectional recoater 109 that retains powder between the two wipers 109a, 109b. In such an embodiment, the movement of the recoater 109 on the powder layer forming stroke differs for different ones of the thinner powder layers and the recoater 109 may have different finishing locations, such as different finishing locations above the powder bed 104, for different powder layers. Irradiation zones may be defined for the powder layer and/or allocated to the scanners 106a, 106b, 106c, 160d , as described above with reference to Figures 3 to 11, taking account of the finishing location of the recoater 109 for each powder layer.

It is believed that by forming overhang regions with thinner (including zero-thickness) layers allows overhang regions to be built without supports where, when using only thicker layers, supports would be required. Renishaw has built a dome without supports using variable layer thickness.

It will be understood that it may also be desirable to vary the powder layer thickness based on a geometric characteristic of other surface of the object such as upward facing surfaces (in the build orientation). This may be desirable in order to improve surface finish.

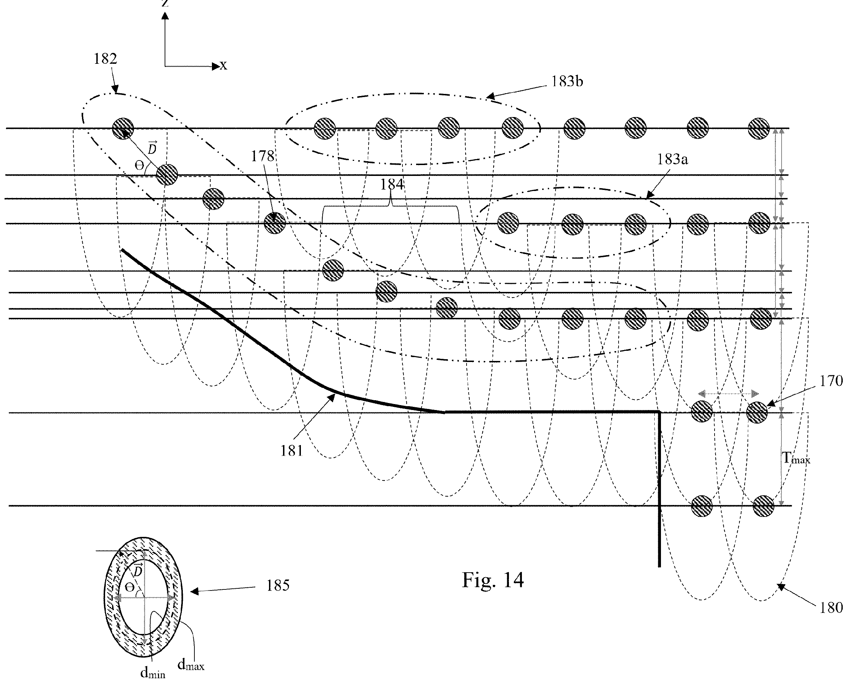

Figure 14 illustrates a further embodiment of the invention that implements variable layer thickness. Each hatched spot represents a scan path 170 of a powder layer. Each (short) dashed lines represent a melt pool 180 that may be created by irradiating a corresponding scan path 170 with one of the laser beams. The melt pools have a depth that is more than the thickness of the powder layer being irradiated such that the resultant consolidated material joins with consolidated material below. In the illustration, the melt pool depth is illustrated as being around two powder layers for clarity but, in practise the melt pool depths may be much deeper, such as tens of powder layers. The melt pools have a width greater than a horizontal spacing, d, between adjacent scan paths such that adjacent scan paths form a continuum of consolidated material.

The group 181 of scan paths form an outer surface of the object, referred to hereinafter as the "skin" of the object. The groups 183a and 183b of scan paths form consolidated material that merges/joins with consolidated material of the skin in layers below and is referred to hereinafter as a "shell" of the object (the shell is an inner region between the skin and the core). The scan paths of the skin 182 and the shell 183a and 183b may be contour scan paths, i.e. a scan path that follows at least part of the shape of the outer surface of the object. The skin forms at least the downwardly facing surfaces (overhangs) of the object in the as built orientation. However, it will be understood that contour scans that form a skin may also form other surfaces such as horizontally facing and upwardly facing surfaces. (The direction of a surface is the normal to the surface in a direction from consolidated material to powder).

Scan paths that form consolidated material within the skin and/or shell are referred to hereinafter as a "core" of the object. The scan paths of the core may be contour scan paths or may be scan paths arranged in another pattern, such as a raster scan path, for example in the known meander, stripe or chequerboard patterns used in powder bed fusion. Accordingly, the scan paths of the core may not be parallel with the scan paths of the shell and skin, although in Figure 13, the scan paths of the core are illustrated as parallel with the scan paths of the skin and shell for convenience.

Line 181 represents an outline of a geometry to be formed by consolidating the material through the irradiation.

Scan paths of the core are irradiated on powder layers, wherein a thickness of powder (unconsolidated material) between the surface of the powder bed and consolidated material below is (as least substantially) equal to a maximum layer thickness, Tₘₐₓ, to be consolidated in the build. Set scanning parameters suitable for consolidating material of this thickness such that material consolidated by the irradiation joins to the consolidating material below are used throughout the core. However, this thickness of powder may be formed through the formation of one or more powder layers by the recoater 109 as now described.

Irradiation of each scan path of the skin 181 is carried out after forming a powder layer having a thickness dependent on a geometry of the object being built, for example based on an angle of a downwardly facing surface to be formed by irradiating the scan path. The thickness of the powder layer (relative to the height of previous powder layer) can be from 0µm (a "zero-layer thickness") to the maximum layer thickness, Tₘₐₓ. In one embodiment, the possible powder layer thicknesses that may be selected by planning software may be in defined steps between 0µm and Tₘₐₓ, such that Tₘₐₓ is a multiple of a smallest step in powder thickness. The smallest step in powder thickness may be less than or equal 20µm, and preferably less than or equal to 10µm. The smallest step may be greater or equal to 1µm, and preferably greater or equal to 5µm. Tₘₐₓ may be greater or equal to 50µm, and preferably greater or equal to 60µm. Tₘₐₓ may be greater or equal to 100µm or even greater or equal to 120µm.

In this embodiment, the powder layer thicknesses are based on an angle of the downwardly facing surface to be formed by the scan path. The angle of the downwardly facing surface may vary for different parts of the contour scan path. The contour scan path may not be a closed scan path but may be "open" with start and ends points. For example, if the angle of the downwardly facing surface to be formed is greater than a threshold value, formation of this steeper surface may be carried out through irradiation of a contour scan path on a subsequent powder layer. Furthermore, if a bidirectional recoater 109 is used to form the powder layers, the contour scan path may only form overhangs that have an overhang direction in the recoater direction when forming the next powder layer.

Scan paths of the shell 183a and 183b continue on the same powder layers as the core but the scanning parameters, such as laser power, are dynamically adjusted as one moves from scan paths adjacent to the core towards an outer surface of the object. The scanning parameters may be dynamically adjusted to reduce a melt pool depth as one moves from scan paths adjacent to the core towards an outer surface of the object. It has been found that even if a first layer of an overhang is formed without distortion that could cause failure of the build, the irradiation of subsequent powder layers above the overhang at a maximum energy density can cause build failure. Accordingly, by dialling down the laser and/or scanning parameters within the shell failure of the build can be avoided.

The location of scan paths on each powder layer may be based on the scan path being between a maximum distance, dₘₐₓ, and a minimum distance, dₘᵢₙ, from adjacent scan paths (both within the same powder layer and in other powder layers). The maximum distance, dₘₐₓ, and the minimum distance, dₘᵢₙ, may differ for different angular orientations Θ between adjacent scan paths/adjacent exposures (and will in-part depend on melt pool shape). The angular orientation is defined by an angle Θ a vector *̅D̅*̅ between exposures on adjacent scan paths makes to a build plane 110. Typically, the melt pool is deeper than it is wide and hence, a larger minimum and maximum distance may be used for the vertical direction than the horizontal direction. However, melt pools created in the conduction or transition modes may have a width greater than the depth. Between the horizontal direction and the vertical directions, the minimum and maximum distances may transition smoothly. This is schematically illustrated at 185, wherein the elliptical ring illustrates a range of acceptable distances at each angular orientation and the dotted ellipse, the central value. This range of acceptable values provides some leeway in selecting a layer thickness for the skin as the scan path of the skin does not have to be located an exact distance from the adjacent exposure on the previous/next layer. This is illustrated in Figure 13, wherein the scan paths of the skin do not exactly follow the shape of the intended geometry 181. Furthermore, there is a threshold angle of the overhang relative to the build plane 110 above which the same powder layer thickness, Tₘₐₓ, can be used as that used for the core because the maximum distance acceptable for that angle and above has a vertical component equal to or greater than Tₘₐₓ. For angles of the overhang below the threshold angle, a powder thickness thinner than Tₘₐₓ is used. The threshold angle may be less than 45° or even less than 15°.

US2020/0269352 discloses an exposure regime in an overhang region, wherein not each powder layer is irradiated in a region that forms at least a portion of the surface. Not to be tied to any one theory, but it is believed that such an exposure regime helps to prevent build failure because, when forming the first layer of an overhang region, the overhang region distorts upwardly as it cools during the build, but not enough to result in an immediate build failure (and it can do if a hard recoater is used that does not easily ride over protruding material). When a subsequent powder layer is formed, the scanning parameters are selected for an expected powder thickness, but this is not the actual powder layer thickness because of the upward distortion of the overhang region. Accordingly, the scanning parameters used to scan the next layer can cause overheating of the overhang region and unacceptable distortion. Not irradiating each powder layer in the overhang region acts to compensate for the loss of powder thickness caused by the distortion without having to alter the scanning parameters. However, such a regime may result in a rougher/less accurate surface finish as larger steps are made in the build direction, z, between scan paths that form the surface.

In the embodiment of the invention, a smoother/more accurate outer surface is achieved as scan paths of the skin are maintained closer together. However, subsequent overheating of the overhang is avoided in two ways. Firstly, by dialling down the energy density for the scan paths of the shell, overheating of the overhang is avoided. Secondly, the scan paths of the shell for any one powder layer do not result in consolidated material that joins up with the scan paths of the skin if a powder layer thickness below the scan path of the shell is two thin. This means that for overhangs below a certain angle, the consolidated material formed by irradiating scan paths of a shell will be separated, in the plane of the powder layer, from consolidated material formed by irradiating scan paths of a skin in the same powder layer. This gap in consolidated material for the powder layer is completed by irradiating scan paths of a shell in a subsequent powder layer. For example, the gap 184 between the group 183a of shell scan paths and scan path 178 of the skin is consolidated by irradiating scan paths of group 183a of the shell on a subsequent powder layer.

Irradiation of the scan paths of the skin 182 may be carried out with scanning parameters that are different to the scanning parameters used for the scan paths of the core.

In one embodiment, rather than being contour scans, the scan paths of the shell could be an extension of a scan path of the core, wherein, as a laser beam moves along a scan path from the core to the shell, the scanning parameters are adjusted to reduce a depth of the melt pool.

Referring to Figures 14a to 14f, a layer-by-layer description of irradiating the scan paths will now be described. Figure 14a shows the formation of the first four powder layers. The first three powder layers, L₁, L_{2,} L₃ are each formed at a powder thickness Tₘₐₓ relative to the previous powder layer. Scan paths are irradiated to form a vertical section of the object. After irradiating scan path 171, a fourth powder layer L₄ is formed having a zero-layer thickness relative to previous powder layer L₃. This replenishes the powder denuded by the irradiation of scan path 171. Scan path 172 is then irradiated by a laser beam. As illustrated in Figures 14b and 14c, this process for the fourth powder layer is then repeated for the fifth and sixth powder layers, wherein powder layer L₅/L₆ is formed having a zero-layer thickness relative to previous powder layer L₄/ L₅ to replenish powder denuded by the irradiation of scan path 172/173 and then scan path 173/174 is irradiated by a laser beam.

As illustrated in Figure 14d, powder layers L₇, L₈, L₉ are each formed having a powder thickness greater than zero but less than Tₘₐₓ. Each powder layer is illustrated as having a different powder thickness relative to the previous powder layer. For each powder layer, a scan path 175, 176, 177 of the skin is irradiated. As the combined powder thickness of layers L₇, L₈ and L₉ is less than Tₘₐₓ, no shell or core scan paths are irradiated on these powder layers.

Figure 14e illustrates powder layer L₁₀, which, together with layers L₇, L₈ and L₉, form a powder thickness substantially equal to Tₘₐₓ from powder layer L₆. Accordingly, for layer Lie, in addition to irradiation of scan path 178 of the skin, scan paths 190 of the core and scan paths 183a of the shell are also irradiated. This leaves a gap 184 within powder layer L₁₀ of yet to be consolidated powder between the material consolidated by irradiating the scan path 178 and the material consolidated by the scan paths 183a of the shell.

Further powder layers L₁₁, L₁₂ and L₁₃ are formed and scan paths 179, 193 and 194 of the skin irradiated, as illustrated in Figure 14f. As before, as a total thickness of powder layers L₁₁, L₁₂ and L₁₃ adds up to Tₘₐₓ, scan paths of the core 191 and shell 183b are irradiated on powder layer L₁₃. The core scan paths are irradiated using the pre-set scanning parameters for the core and the shell scan paths are irradiated using scanning parameters that are adjusted for each shell scan path to produce different melt pool depths for each scan path. Irradiation of the shell scan paths 183b consolidates material within gap 184 on previous powder layer L₁₀. On powder layer L₁₃, there is a gap 185 of unconsolidated material between the shell 193b and the skin scan path 194.

During formation of the object, the overhang region may curl upward as the melted material cools. Wipers 109a, 109b on the recoater 109 are deformable or flexible (compliant), for example made of deformable material or comprise a brush of flexible bristles, such that the wipers 109a, 109b can ride over any consolidated material that protrudes above the build plane 110. Accordingly, powder layers can still be formed even if upward deformation of the object occurs. However, the upward deflection of the object changes a thickness of powder to be consolidated by an exposure. The method may compensate for such deflections by adjusting the melt pool depth for the shell scan paths 183a, 183b and leaving powder in the gaps 184, 185 between the shell scan paths and the skin, which is consolidated by irradiation of scan paths on later powder layers. In this way, overheating and build failure may be avoided.

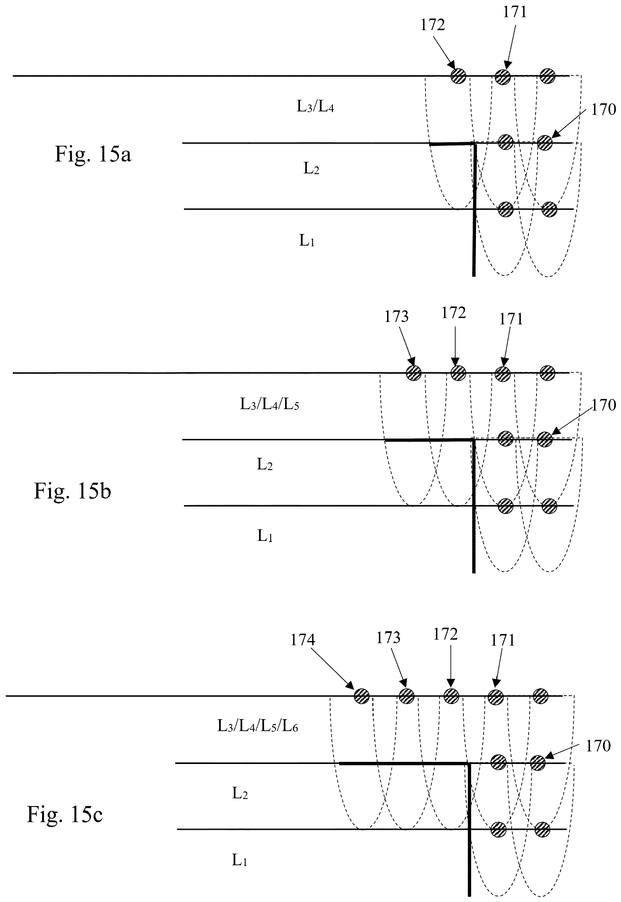

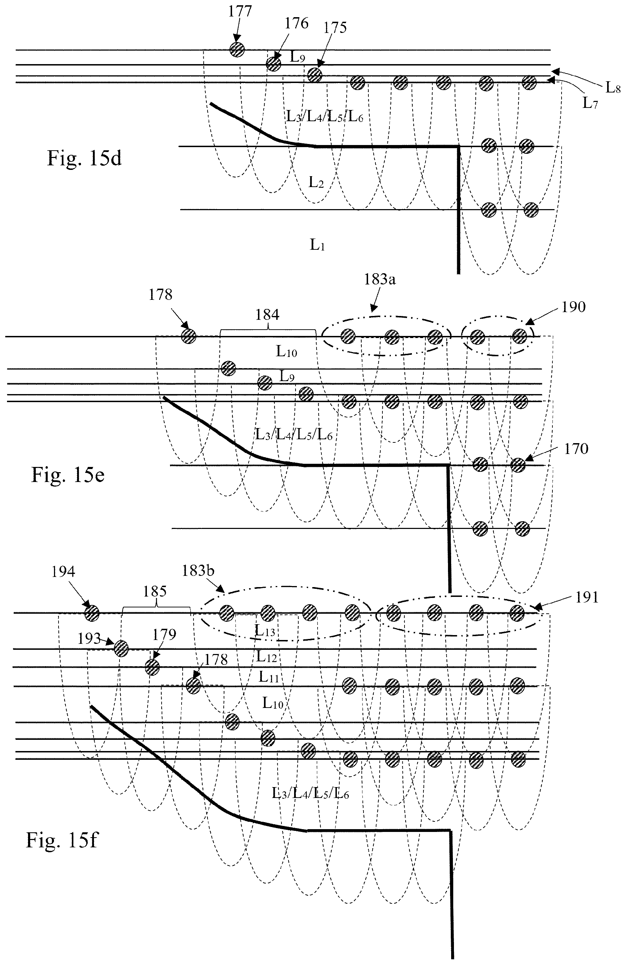

Figure 15 illustrates an alternative embodiment, wherein, rather than confining scan paths of the shell and core to powder layers Tₘₐₓ apart, the scan paths of the core 191 and shell 183 are distributed across different powder layers such that core and shell areas of material to be consolidated within one layer is consolidated by melting powder through irradiation of scan paths in the powder layer and irradiation of scan paths on later powder layers. The scan paths of the core 191 are distributed such that, at least for some powder layers, an area to be consolidated within the powder layer comprises a plurality of regions that are consolidated to form together the core within the powder layer by melting powder of each region together with powder of at least one other powder layer through the irradiation of the core scan paths, wherein powder of different ones of the regions are melted en masse with powder of different other powder layers. For example, for powder layer L₁, the powder of the core is consolidated by irradiating scan paths 170a and 170b, wherein scan path 170a is on powder layer L₁ and scan path 170b is on powder layer L₂. In this embodiment, to achieve this, core scan paths are irradiated at powder thicknesses that are half of Tₘₐₓ. However, it will be understood that the core scan paths could be distributed with different powder thicknesses between adjacent core scan paths that consolidate powder in the same powder layer.

The scan paths of the skin 183 are distributed across powder layers, some of which may not correspond to powder layers for which there are core scan paths. Distributing the shell scan paths across additional powder layers may be beneficial as it may lesson or eliminate the requirement to adjust the scanning parameters to alter melt pool depth. In particular, rather than altering a melt pool depth, the influence of irradiation of the shell scan path on the skin may be reduced by spacing the shell scan path further from the skin through locating the shell scan path on an appropriate powder layer, an example of which is shown in Figure 15.

Using the methods described with reference to Figure 13 to 15 may allow the formation of low angled overhangs without supports.

Where the shell scans finish (e.g. the size of the gap between the shell and the skin on a particular powder layer) and/or the adjustment of the scanning parameters, such as laser power, for different scan paths of the shell or as the laser beam moves along a scan path that extends from the core to the shell may be determined using a thermal model of the build, empirically based on previous builds of the object and/or from feedback from in process sensors, such as a visible light or thermal camera monitoring the build of the object and/or a previous build of the object. For example, from images captured by the camera after forming each powder layer, it may be possible to determine if the regions of the object built so far protrude above the powder layer. Regions of the object protruding above the powder layer are identified as regions that should not be irradiated on that powder layer, e.g. these regions become the gap between the scan paths of the shell scan paths and the skin scan path. It may also be possible to predict a powder layer thickness even after the region has been covered by powder through the formation of subsequent layers from knowledge of powder layer thicknesses formed above a protruding part and determine an adjustment of the scan parameters for scan paths of the shell for subsequent layers based on the predicted powder layer thickness. These determinations may be carried out based on data obtained during one or more previous builds of the object to produce a final set of scan paths and scanning parameters for a build of the object, i.e. the adjustment is not necessarily made in process but may be made across builds.

The method of Figure 15 may have advantages over that shown in Figure 13 when the irradiation is carried out during formation of the powder layers with the recoater 109 in that the irradiation is more equally spread across the powder layers. This may reduce or eliminate delays in irradiation whilst formation of the powder layer is completed or delays in formation of the next powder layer whilst irradiation of the current powder layer is completed. Furthermore, for both embodiments, if localised spreading of powder in the overhang regions having an angle below a threshold angle is carried out, the core may continue to be processed for a lower powder layer even as the powder layers of variable layer thickness are built up in the overhang region. Yet further, with the possibility of variable powder layer thicknesses, adjusting scanning parameters to alter melt pool depth and/or irradiating whilst recoating, it may be possible to arrange the scan paths taking into account recoater movement, in particular the starting and/or finishing location of the recoater, such that, if consolidation of an area within a powder layer cannot be completed in time before it is covered by the recoater during formation of the next powder layer, regions of that area (such as shell and/or core) may be consolidated by irradiating scan paths in later layers. This method can be combined with the methods described with reference to Figures 3 through 10 to avoid delays in powder layer formation and/or times when the material is not irradiated.

It will be understood that the methods described with reference to Figures 12 to 15 may be carried out with a unidirectional recoater (a recoater that forms powder layers during movement in only a single direction) and/or without irradiating powder layers during movement of the recoater across the powder bed. Furthermore, the methods described with reference to Figure 12 and 15 may be carried out using a single scanner for directing one laser beam.

It will be understood that modifications and alterations can be made to the above-described embodiments without departing from the scope of the invention as defined herein. For example, bidirectional spreading of powder layers can be achieved without using a pair of wipers 109a, 109b, for example, by providing powder dosers on opposite sides of the powder bed, wherein each doser doses powder to a different side of a single wiper. Furthermore, the invention embodied in Figures 1 to 11 is not limited to four scanners but may comprise any number of scanners more than one.

## Claims

1. A method of determining an irradiation sequence for a powder bed fusion process, wherein each scanner of a plurality of scanners is operated to steer a corresponding energy beam across the powder bed such that a plurality of the energy beams irradiate the powder bed when a recoater is above the powder bed, and powder layers are formed with the recoater such that a movement of the recoater on a powder layer forming stroke differs for different ones of the powder layers, the method comprising determining an irradiation sequence for a powder layer by allocating each scanner to irradiation regions taking into account the movement of the recoater on the powder layer forming stroke differing for different ones of the powder layers such that irradiation of each irradiation region is completed before the irradiation region is covered during formation of the next powder layer.

2. A method according to claim 1, comprising determining the irradiation regions for a powder layer, wherein a size of at least one of the irradiation regions is based on the movement of the recoater on the powder layer forming stroke of the recoater.

3. A method according to claim 1 or claim 2, comprising determining the irradiation regions for a powder layer, and determining the irradiation sequence by allocating a number of the irradiation regions to each scanner based on the movement of the recoater on the powder layer forming stroke such that irradiation of each irradiation region is completed before the irradiation region is covered during formation of the next powder layer.

4. A method according to any one of the preceding claims, wherein a different number of irradiation regions is allocated to at least one of the scanners on successive powder layers.

5. A method according to any one of the preceding claims, wherein a different number of irradiation regions is allocated to two or more of the scanners within one of the powder layers.

6. A method according to any one of the preceding claims, wherein an irradiation time for different scanners for one of the powder layers is different, wherein the number of irradiation regions may be allocated such that total irradiation times for the scanners are all within a predetermined total irradiation threshold over two or more powder layers.

7. A method according to any one of the preceding claims, wherein determining the irradiation sequence comprises allocating each scanner to the irradiation regions based on a parameter indicative of an available irradiation time between forming a powder layer across the irradiation region and the irradiation region being covered during formation of the next powder layer, wherein the available irradiation time is different for different irradiation regions, wherein the parameter may the available irradiation time between forming a powder layer across the irradiation region and the irradiation region being covered during formation of the next powder layer and/or a location of the recoater at a particular time.

8. A method according to any one of the preceding claims, wherein each scanner of a plurality of scanners is operated to steer a corresponding energy beam across the powder bed such that a plurality of the energy beams irradiates the powder bed when a recoater is moving across the powder bed to form a powder layer.

9. A method according to any one of the preceding claims, wherein, in the powder bed fusion process, powder layers are formed with the recoater such that starting and/or finishing location(s) of the recoater on a powder layer forming stroke differs for different ones of the powder layers and the method comprises determining irradiation regions for a powder layer, wherein a size of at least one of the irradiation regions is based on the starting and/or finishing location(s) of the recoater on the powder layer forming stroke when forming the powder layer, wherein irradiation regions closer to the finishing location may comprise areas that can be irradiated in a shorter time period compared to irradiation regions further from the finishing location, and/or wherein the size is a width of the irradiation region in a direction of travel of the recoater across the powder bed or an area of the irradiation region.

10. A method according to any one of the preceding claims, wherein the powder bed fusion process comprises forming consecutive powder layers, wherein a first powder layer is formed by movement of the recoater across the powder bed in a first direction and a second, consecutive powder layer is formed by movement of the recoater across the powder bed in a second direction opposed to the first direction and wherein a finishing location for each powder layer may be at a side of the powder bed, wherein, for consecutive layers, the finishing location for the recoater is at a different side of the powder bed or the powder bed fusion process comprises forming, with the recoater, a first powder layer that extends partially across the powder bed and a second, consecutive powder layer that extends across the powder bed, wherein a first powder layer area is different to a second powder layer area.

11. A method according to any one of the preceding claims, wherein the powder bed fusion process comprises generating a gas flow across the powder bed in a direction perpendicular to a direction of movement of the recoater and each irradiation region is determined to extend across the powder bed in a direction of the gas flow and a width of the irradiation region in a direction of movement of the recoater is based on the movement of the recoater when forming the powder layer.

12. A method according to any one of the preceding claims, wherein the scanners are allocated to the irradiation regions such that, when an irradiation region allocated to the scanner becomes unavailable for irradiation, another irradiation region allocated to the scanner is available for irradiation.

13. A powder bed fusion process comprising forming powder layers of a powder bed with the recoater such that a movement of the recoater on a powder layer forming stroke differs for different ones of the powder layers and operating each scanner of a plurality of scanners to steer a corresponding energy beam across the powder bed such that a plurality of the energy beams irradiate the powder bed when a recoater is over the powder bed in accordance with an irradiation sequence determined in accordance with the method of any one of claims 1 to 12.

14. A powder bed fusion apparatus comprising a controller arranged to control the powder bed fusion apparatus to carry out the powder bed fusion process according to claim 13.

15. A data carrier having instruction stored thereon, wherein, when the instructions are executed by a processor, the processor is caused to carry out the method of any one of claims 1 to 12.
